(19) Europäisches Patentamt
European Patent Office
Office européen des brevets

(11) EP 3 450 492 A1

(12) **EUROPEAN PATENT APPLICATION**
published in accordance with Art. 153(4) EPC

(43) Date of publication:
**06.03.2019 Bulletin 2019/10**

(21) Application number: **17806448.1**

(22) Date of filing: **22.05.2017**

(51) Int Cl.:
***C08L 9/06*** *(2006.01)* ***B60C 1/00*** *(2006.01)*
***C08K 3/04*** *(2006.01)* ***C08K 3/36*** *(2006.01)*
***C08K 5/05*** *(2006.01)* ***C08K 5/54*** *(2006.01)*

(86) International application number:
**PCT/JP2017/019082**

(87) International publication number:
**WO 2017/208891 (07.12.2017 Gazette 2017/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.06.2016 JP 2016111118**
**02.06.2016 JP 2016111119**
**02.06.2016 JP 2016111120**
**02.06.2016 JP 2016111121**
**02.06.2016 JP 2016111122**

(71) Applicant: **Sumitomo Rubber Industries, Ltd.**
**Kobe-shi, Hyogo 651-0072 (JP)**

(72) Inventor: **IZUMO, Suguru**
**Kobe-shi**
**Hyogo 651-0072 (JP)**

(74) Representative: **Manitz Finsterwald Patentanwälte PartmbB**
**Martin-Greif-Strasse 1**
**80336 München (DE)**

(54) **RUBBER COMPOSITION, TIRE, AND PROCESS FOR PRODUCING RUBBER COMPOSITION**

(57) According to the rubber composition of the present invention comprising a starting chemical comprising a rubber component comprising styrene-butadiene rubber, a filler comprising silica, a silane coupling agent and an organoaluminum compound, a rubber composition for a tire having enhanced wet grip performance and abrasion resistance as well as enhanced fuel efficiency and a tire tread and tire produced using the rubber composition can be provided.

EP 3 450 492 A1

## Description

TECHNICAL FIELD

The present invention relates to a rubber composition, in particular a rubber composition for a tire, a tire tread and tire produced using the rubber composition, and a method of preparing a rubber composition, in particular a rubber composition for a tire.

BACKGROUND OF THE INVENTION

A tire comprises various members such as a tread and an inner liner, and various performances are imparted on each member. Wet grip performance and the like are demanded for a tread coming into contact with a road surface from safety point of view, and a method of improving the performance by addition of aluminum hydroxide was proposed (Patent Document 1).

However, in the case of addition of aluminum hydroxide, there is a problem that a breaking strength is decreased and abrasion resistance is deteriorated, and thus further improvement is demanded.

PRIOR ART DOCUMENT

Patent Document

Patent Document 1: JP 2002-338750 A

SUMMARY OF THE INVENTION

PROBLEM TO BE SOLVED BY THE INVENTION

An object of the present invention is to provide (1) a rubber composition, in particular a rubber composition for a tire having enhanced wet grip performance and abrasion resistance as well as enhanced fuel efficiency, and a tire tread and a tire produced using the rubber composition, and (2) a method of preparing a rubber composition, in particular a rubber composition for a tire having enhanced wet grip performance and abrasion resistance as well as enhanced fuel efficiency.

MEANS TO SOLVE THE PROBLEM

The inventors of the present invention have made intensive studies in order to solve the above-mentioned problems, and as a result, have found that the above-mentioned problem (1) can be solved by compounding a filler comprising silica and a silane coupling agent to a predetermined rubber component and further compounding a predetermined organoaluminum compound instead of aluminum hydroxide, and have made further studies and thus have completed the present invention. Further, it was found that in the case of compounding a filler comprising silica and a silane coupling agent to a predetermined rubber component and compounding a predetermined organoaluminum compound instead of aluminum hydroxide, by holding a kneaded product at high temperature at the time of discharging at a former stage of a kneading step, the above-mentioned problem (2) can be solved. Furthermore, it was found that in the case of compounding a filler comprising silica and a silane coupling agent to a predetermined rubber component and compounding a predetermined organoaluminum compound instead of aluminum hydroxide, by compounding, at a former stage of a kneading step, a basic vulcanization accelerator which is usually compounded at a latter stage of a kneading step, the above-mentioned problem (2) can be solved, and further studies have been made and thus the present invention has been completed.

Namely, the present disclosure relates to:

[1] a rubber composition comprising a starting chemical comprising a rubber component comprising a styrene-butadiene rubber, a filler comprising silica, a silane coupling agent and an organoaluminum compound,

[2] the rubber composition of the above [1], wherein the silane coupling agent is a silane coupling agent having a mercapto group and is at least one selected from the group consisting of a silane coupling agent comprising a linking unit A represented by the following formula (I) and a linking unit B represented by the following formula (II) and a silane coupling agent represented by the following formula (III),

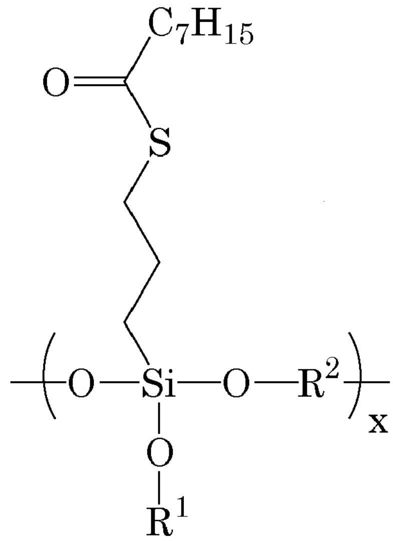

( I )

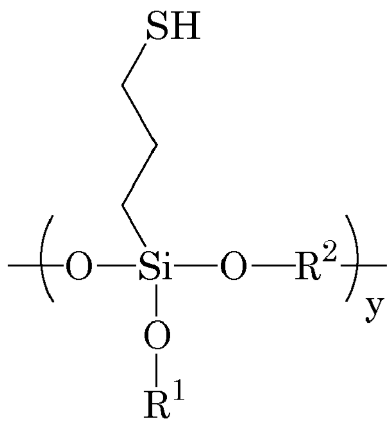

( I I )

In the formulae,
x is an integer of 0 or more, and y is an integer of 1 or more.

$R^1$ represents hydrogen, halogen, a branched or un-branched alkyl group having 1 to 30 carbon atoms, a branched or un-branched alkenyl group having 2 to 30 carbon atoms, a branched or un-branched alkynyl group having 2 to 30 carbon atoms, or the alkyl group at the end of which hydrogen has been replaced by a hydroxyl group or a carboxyl group. $R^2$ represents a branched or un-branched alkylene group having 1 to 30 carbon atoms, a branched or un-branched alkenylene group having 2 to 30 carbon atoms, or a branched or un-branched alkynylene group having 2 to 30 carbon atoms. A ring structure may be formed with $R^1$ and $R^2$.

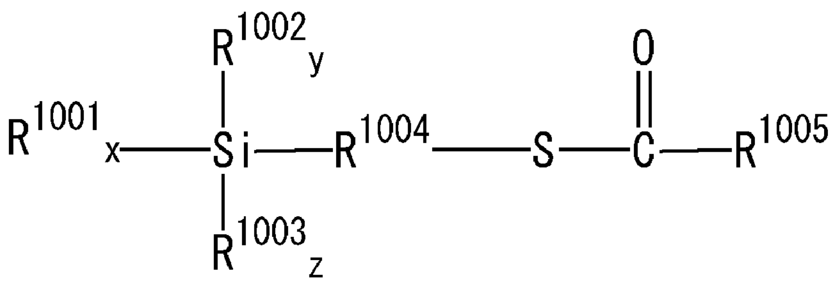

(III)

In the formula,
$R^{1001}$ is a monovalent group selected from -Cl, -Br, $-OR^{1006}$, $-O(O=)CR^{1006}$, $-ON=CR^{1006}R^{1007}$, $-ON=CR^{1006}R^{1007}$, $-NR^{1006}R^{1007}$ and $(OSiR^{1006}R^{1007})_h(OSiR^{1006}R^{1007}R^{1008})$ ($R^{1006}$, $R^{1007}$ and $R^{1008}$ may be the same or different, each of them is hydrogen or a monovalent hydrocarbon group having 1 to 18 carbon atoms, and an average value of h is 1 to 4).

$R^{1002}$ is $R^{1001}$, a hydrogen atom or a monovalent hydrocarbon group having 1 to 18 carbon atoms.

$R^{1003}$ is $R^{1001}$, $R^{1002}$, a hydrogen atom, or a $[O(R^{1009}O)_j]0.5$- group ($R^{1009}$ is an alkylene group having 1 to 18 carbon atoms, j is an integer of 1 to 4).

$R^{1004}$ is a divalent hydrocarbon group having 1 to 18 carbon atoms. $R^{1005}$ is a monovalent hydrocarbon group having 1 to 18 carbon atoms. x, y and z are numerals satisfying relations of $x+y+2z=3$, $0 \leq x \leq 3$, $0 \leq y \leq 2$ and $0 \leq z \leq 1$,

[3] the rubber composition of the above [1], wherein a CTAB specific surface area of silica is 100 $m^2/g$ or more, preferably 165 $m^2/g$ or more, more preferably 170 $m^2/g$ or more, and a BET specific surface area by nitrogen adsorption of silica is 110 $m^2/g$ or more, preferably 175 $m^2/g$ or more, more preferably 180 $m^2/g$ or more,

[4] the rubber composition of the above [3], wherein the CTAB specific surface area of silica is 180 to 600 $m^2/g$, preferably 190 to 300 $m^2/g$, more preferably 195 to 300 $m^2/g$, further preferably 195 to 250 $m^2/g$, further preferably 197 to 250 $m^2/g$, and the BET specific surface area by nitrogen adsorption of silica is 185 to 600 $m^2/g$, preferably 190 to 300 $m^2/g$, more preferably 195 to 300 $m^2/g$, further preferably 200 to 300 $m^2/g$, further preferably 200 to 260 $m^2/g$, further preferably 210 to 260 $m^2/g$,

[5] the rubber composition of any of the above [1] to [4], wherein the filler further comprises carbon black,

[6] the rubber composition of the above [5], wherein a compounding amount of the silica is 50 to 150 parts by mass, preferably 60 to 120 parts by mass, more preferably 60 to 110 parts by mass, a compounding amount of the carbon black is 5 to 50 parts by mass, preferably 5 to 35 parts by mass, more preferably 5 to 20 parts by mass, further preferably 8 to 20 parts by mass, and a compounding amount of the organoaluminum compound is 5 to 45 parts by mass, preferably 5 to 40 parts by mass, more preferably 7 to 40 parts by mass, further preferably 10 to 40 parts by mass based on 100 parts by mass of the rubber component and a compounding amount of the silane coupling agent is 1 to 20 parts by mass, preferably 1.5 to 20 parts by mass, more preferably 2 to 20 parts by mass, further preferably 5 to 20 parts by mass, further preferably 5 to 15 parts by mass, further preferably 7 to 12 parts by mass based on 100 parts by mass of the silica,

[7] the rubber composition of any of the above [1] to [6], wherein the organoaluminum compound is an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively,

[8] a tire tread produced using the rubber composition of any of the above [1] to [7],

[9] a tire having the tire tread of the above [8],

[10] a method of preparing a rubber composition comprising a starting chemical comprising a rubber component comprising a styrene-butadiene rubber, a filler comprising silica, a silane coupling agent and an organoaluminum compound, the method comprising:

a kneading step comprising at least two stages comprising a former stage for kneading the starting chemical containing no vulcanization chemical and a latter stage for adding a vulcanization chemical to a kneaded product obtained in the former stage and kneading a mixture, wherein in the former stage, a discharge temperature of the kneaded product is a temperature within a predetermined temperature range and the kneaded product is held at the discharge temperature for a predetermined period of time in order to remove alcohol generated during the kneading, and

[11] a method of preparing a rubber composition comprising a starting chemical comprising a rubber component comprising styrene-butadiene rubber, a filler comprising silica, a silane coupling agent and an organoaluminum compound, the method comprising:

a kneading step comprising at least two stages comprising a former stage for kneading the starting chemical containing no vulcanizing agent and a latter stage for adding the vulcanizing agent to a kneaded product obtained in the former stage and kneading a mixture,

wherein the former stage is a stage, where a basic vulcanization accelerator is added to the starting chemical comprising the rubber component, the filler, the silane coupling agent and the organoaluminum compound, and a mixture is kneaded.

## EFFECTS OF THE INVENTION

According to the present invention, it is possible to provide a rubber composition having excellent characteristics, in particular a rubber composition for a tire having improved wet grip performance and abrasion resistance and improved fuel efficiency, a tire tread and a tire produced using the rubber composition, and a preparation method of a rubber composition having excellent characteristics, in particular a rubber composition for a tire having improved wet grip performance and abrasion resistance and improved fuel efficiency.

EMBODIMENT FOR CARRYING OUT THE INVENTION

In the present invention, there are exemplified from a first embodiment to a fifth embodiment, which are explained below.

<First embodiment>

The first embodiment relates to:

[1] a rubber composition comprising a starting chemical comprising a rubber component (A-1) comprising a styrene-butadiene rubber, a filler comprising silica (B1-1), a silane coupling agent (C-1) and an organoaluminum compound (D-1),
[2] the rubber composition of the above [1], wherein the filler further comprises carbon black (B2-1),
[3] the rubber composition of the above [2], wherein a compounding amount of the silica (B1-1) is 50 to 150 parts by mass, preferably 60 to 120 parts by mass, more preferably 60 to 110 parts by mass, a compounding amount of the carbon black (B2-1) is 5 to 50 parts by mass, preferably 5 to 35 parts by mass, more preferably 5 to 20 parts by mass, further preferably 8 to 20 parts by mass, and a compounding amount of the organoaluminum compound (D-1) is 5 to 45 parts by mass, preferably 5 to 40 parts by mass, more preferably 7 to 40 parts by mass, further preferably 10 to 40 parts by mass based on 100 parts by mass of the rubber component (A-1) and a compounding amount of the silane coupling agent (C-1) is 1 to 20 parts by mass, preferably 1.5 to 20 parts by mass, more preferably 2 to 20 parts by mass, further preferably 5 to 20 parts by mass, further preferably 5 to 15 parts by mass, further preferably 7 to 12 parts by mass based on 100 parts by mass of the silica (B1-1),
[4] the rubber composition of any of the above [1] to [3], wherein the organoaluminum compound (D-1) is an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively,
[5] a tire tread produced using the rubber composition of any of the above [1] to [4], and
[6] a tire having the tire tread of the above [5].

According to the first embodiment, a rubber composition having excellent characteristics, in particular a rubber composition for a tire having improved wet grip performance and abrasion resistance and improved fuel efficiency, and a tire tread and a tire produced using the rubber composition can be provided.
Modes for performing the first embodiment will be explained below.

<Rubber component (A-1)>

The rubber component (A-1) comprises a styrene-butadiene rubber (SBR). SBR is not limited particularly, and for example, an emulsion-polymerized styrene-butadiene (E-SBR), a solution-polymerized styrene-butadiene (S-SBR), a modified styrene-butadiene thereof (modified S-SBR, modified E-SBR) and the like can be used. Examples of the modified SBR include an end-modified and/or main-chain-modified SBR, a modified SBR coupled with a tin or silicon compound or the like (such as a condensate, one having a branch structure, etc.).
A vinyl content of the SBR is preferably not less than 20 mole %, more preferably not less than 25 mole %, from the viewpoint of sufficient wet grip performance and dry grip performance. On the other hand, from the viewpoint of good abrasion resistance, the vinyl content is preferably not more than 80 mole %, more preferably not more than 70 mole %. It is noted that the vinyl content of the SBR is a value determined by an infrared absorption spectrum analysis method.
A styrene content of the SBR is preferably not less than 20% by mass, more preferably not less than 25% by mass, from the viewpoint of sufficient wet grip performance and dry grip performance. On the other hand, from the viewpoint of good abrasion resistance and temperature dependency (a state of a performance change relative to a temperature change being inhibited), the styrene content is preferably not more than 60% by mass, more preferably not more than 50% by mass, further preferably not more than 45% by mass.
A glass transition temperature (Tg) of the SBR is preferably not lower than -60°C, more preferably not lower than -50°C, from the viewpoint of good wet grip performance and dry grip performance. The Tg is preferably not higher than 0°C, more preferably not higher than -10°C from the viewpoint of good initial grip performance and abrasion resistance.
An SBR content is not less than 60% by mass, preferably not less than 70% by mass, more preferably not less

than 80% by mass, more preferably not less than 90% by mass, most preferably 100% by mass based on 100% by mass of the rubber component (A-1), from the viewpoint of sufficient heat resistance and abrasion resistance.

Rubber components other than the SBR may be compounded as the rubber component (A-1). Examples of such other rubber component include diene rubbers such as a natural rubber (NR), a butadiene rubber (BR), an isoprene rubber (IR), a styrene-isoprene-butadiene rubber (SIBR), a chloroprene rubber (CR) and an acrylonitrile-butadiene rubber (NBR), non-diene rubbers such as an ethylene-propylene-diene rubber (EPDM), a butyl rubber (IIR) and a halogenated butyl rubber (X-IIR), and the like. Specific kinds of these other rubber components may be used alone, or two or more kinds thereof may be used in combination.

<Filler>

The filler comprises silica (B1-1). This is because when the filler comprises the silica (B1-1), improvement of wet grip performance and fuel efficiency can be expected. For example, silica prepared by a dry method (anhydrous silica), silica prepared by a wet method (hydrous silica) and the like can be used as the silica (B1-1). In particular, for the reason that the number of silanol groups is large, silica prepared by a wet method is preferable.

A nitrogen adsorption BET specific surface area ($N_2SA$) of the silica (B1-1) is preferably not less than 50 $m^2/g$, more preferably not less than 70 $m^2/g$, more preferably not less than 100 $m^2/g$, more preferably not less than 120 $m^2/g$, further preferably not less than 150 $m^2/g$, from the viewpoint of improvement of fuel efficiency and improvement of abrasion resistance resulting from improvement of reinforcing property. On the other hand, from the viewpoint of securing good dispersibility and inhibiting agglomeration, the $N_2SA$ of the silica (B1-1) is preferably not more than 500 $m^2/g$, preferably not more than 400 $m^2/g$, more preferably not more than 300 $m^2/g$.

The $N_2SA$ of the silica (B1-1) is a value measured by a BET method in accordance with ASTM D3037-81.

A specific kind of the silica (B1-1) may be used alone, or two or more kinds thereof may be used in combination.

Any of fillers which are used usually in this field can be used suitably as a filler other than the silica (B1-1) unless contradictory to the purpose of the first embodiment, and examples of such a filler include carbon black (B2-1). By compounding the carbon black (B2-1), improvement of abrasion resistance can be expected. The filler comprising the silica (B1-1) and the carbon black (B2-1) is preferable.

For example, there are carbon black produced by an oil furnace method and the like as the carbon black (B2-1), and two or more kinds of carbon black having different colloidal properties may be used in combination. Examples thereof include those of GPF, HAF, ISAF, SAF grades, and the like.

A nitrogen adsorption specific surface area ($N_2SA$) of the carbon black (B2-1) is preferably 70 to 250 $m^2/g$, more preferably 110 to 200 $m^2/g$, for the reason that good wet grip performance, dry grip performance and abrasion resistance can be obtained. A dibutyl phthalate oil absorption (DBP) of the carbon black (B2-1) is preferably 50 to 250 ml/100 g for the same reason. It is noted that the $N_2SA$ of the carbon black (B2-1) is a value determined in accordance with JIS K6217-2: 2001, and the DPB is a value determined in accordance with JIS K6217-4: 2001.

A specific kind of the carbon black (B2-1) may be used alone, or two or more kinds thereof may be used in combination.

A compounding amount of the silica (B1-1) is not less than 50 parts by mass, more preferably not less than 60 parts by mass based on 100 parts by mass of the rubber component (A-1) from the viewpoint of sufficient wet grip performance. On the other hand, the compounding amount is not more than 150 parts by mass, preferably not more than 120 parts by mass, more preferably not more than 110 parts by mass from the viewpoint of its good dispersion, and further good abrasion resistance.

When compounding the carbon black (B2-1), a compounding amount thereof is preferably not less than 5 parts by mass, more preferably not less than 8 parts by mass based on 100 parts by mass of the rubber component (A-1) from the viewpoint of good wet grip performance, dry grip performance and abrasion resistance. On the other hand, the compounding amount is preferably not more than 50 parts by mass, more preferably not more than 35 parts by mass, further preferably not more than 20 parts by mass from the viewpoint of maintaining good wet grip performance.

A compounding amount of the filler is preferably not less than 50 parts by mass, preferably not less than 55 parts by mass, more preferably not less than 65 parts by mass based on 100 parts by mass of the rubber component (A-1) from the viewpoint of good wet grip performance, dry grip performance and abrasion resistance. On the other hand, the compounding amount is not more than 170 parts by mass, more preferably not more than 150 parts by mass, further preferably not more than 120 parts by mass from the viewpoint of good wet grip performance and abrasion resistance. A proportion of the silica (B1-1) in the whole filler is preferably not less than 70% by mass, more preferably not less than 75% by mass, more preferably not less than 80% by mass, from the viewpoint of exhibiting an effect of the first embodiment satisfactorily. On the other hand, the proportion is not more than 95% by mass, more preferably not more than 90% by mass for the same reason as mentioned above.

When the filler consists of the silica (B1-1) and the carbon black (B2-1), the compounding amount of the carbon black (B2-1) may be determined from the above-mentioned "total amount of the filler" and the "compounding amount of

the silica (B1-1)" or the compounding amount of the silica (B1-1) may be determined from the above-mentioned "total amount of the filler" and the "compounding amount of the carbon black (B2-1).

<Silane coupling agent (C-1)>

The silane coupling agent (C-1) is not limited particularly, and any of silane coupling agents which are usually used in this field can be used properly. Examples of such a silane coupling agent (C-1) are bis(3-triethoxysilylpropyl)polysulfide, bis(2-triethoxysilylethyl)polysulfide, bis (3-trimethoxysilylpropyl)polysulfide, bis(2-trimethoxysilylethyl)polysulfide, bis(4-triethoxysilylbuyl)polysulfide, bis(4-trimethoxysilylbutyl)polysulfide, and the like. Among these, bis(3-triethoxysilylpropyl)polysulfide, and bis(2-triethoxysilylethyl)polysulfide are preferable, and bis(3-triethoxysilylpropyl)tetrasulfide, and bis(2-triethoxysilylethyl)tetrasulfide are more preferable.

A compounding amount of the silane coupling agent (C-1) is preferably not less than 1 part by mass, more preferably not less than 1.5 parts by mass, more preferably not less than 2 parts by mass, preferably not less than 5 parts by mass, more preferably not less than 7 parts by mass based on 100 parts by mass of the silica (B1-1) from the viewpoint of good abrasion resistance. On the other hand, the compounding amount is preferably not more than 20 parts by mass, more preferably not more than 15 parts by mass, more preferably not more than 12 parts by mass from the viewpoint of obtaining an effect of improvement for increase in cost.

Specific kinds of the silane coupling agents (C-1) may be used alone, and two or more kinds thereof may be used in combination.

<Organoaluminum compound (D-1)>

The organoaluminum compound (D-1) is a complex comprising aluminum and an organic compound, and is one generating aluminum hydroxide by a hydrolysis reaction. Therefore, when such organoaluminum compound (D-1) is compounded, at least a part of the organoaluminum compound (D-1) is subject to hydrolysis during the kneading, and aluminum hydroxide is generated.

Example of such an organoaluminum compound (D-1) includes an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively. Here, the aliphatic hydrocarbon groups are those having a branched or un-branched alkyl group, alkenyl group or alkynyl group as a skeleton and may have a hetero atom such as an oxygen atom, a nitrogen atom and the like. Preferable aliphatic hydrocarbon groups are those having 1 to 12 carbon atoms ($C_{1-12}$) (However, in the case of having an alkenyl group or an alkynyl group as a skeleton, it is necessary that the lower limit of the number of carbon atoms is at least two. Hereinafter the same.), more preferably $C_{1-10}$, more preferably $C_{1-8}$, more preferably $C_{2-6}$. Examples of aliphatic hydrocarbon group represented by $R^a$, $R^b$ or $R^c$ include an ethyl group ($C_2$), an isopropyl group ($C_3$), a sec-butyl group ($C_4$), 3-ethoxycarbonyl-2-propen-2-yl ($C_6$) group and the like.

Examples of the aluminum alcolate include aluminum ethylate, aluminum isopropylate, aluminum diisopropylate mono sec-butyrate, aluminum sec-butyrate, aluminum ethylaceoacetate diisopropylate, aluminum tris-(ethylacetoacetate) and the like.

A compounding amount of the organoaluminum compound (D-1) is preferably not less than 5 parts by mass, more preferably not less than 7 parts by mass, more preferably not less than 10 parts by mass based on 100 parts by mass of the rubber component (A-1) from the viewpoint of good wet grip performance and abrasion resistance. On the other hand, the compounding amount is preferably not more than 45 parts by mass, more preferably not more than 40 parts by mass, for the same reason as mentioned above.

Specific kinds of the organoaluminum compounds (D-1) may be used alone, and two or more kinds thereof may be used in combination.

Besides the above-mentioned components, other compounding components commonly used in the tire industry, for example, softening agents, antioxidants, waxes, stearic acid, zinc oxide, vulcanizing agent such as sulfur, vulcanization accelerators and the like can be optionally compounded in the rubber composition according to one of the first embodiments.

By compounding a softening agent, enhancement of wet grip performance, dry grip performance and initial grip performance can be expected. The softening agent is not limited particularly, and example thereof includes oils. Examples of the oil include process oils such as a paraffin process oil, an aromatic process oil and a naphthenic process oil. When the oil is compounded, a compounding amount thereof is preferably not less than 20 parts by mass, more preferably not less than 25 parts by mass based on 100 parts by mass of the rubber component (A-1) from the viewpoint

of obtaining a sufficient effect resulting from the addition thereof. On the other hand, the compounding amount thereof is preferably not more than 70 parts by mass, more preferably not more than 60 parts by mass from the viewpoint of maintaining abrasion resistance. It is noted that herein the content of oil includes an amount of oil included in an oil-extended rubber.

Specific kinds of the softening agents may be used alone, and two or more kinds thereof may be used in combination.

Examples of vulcanization accelerators include sulfeneamide-based, thiazole-based, thiuram-based and guanidine-based vulcanization accelerators. Examples of sulfeneamide-based vulcanization accelerators include N-cyclohexyl-2-benzothiazylsulfeneamide, N,N-dicyclohexyl-2-benzothiazylsulfeneamide, N-ter-butyl-2-benzothiazylsulfeneamide and the like. Examples of thiazole-based vulcanization accelerators include 2-mercaptobenzothiazole, cyclohexylamine salt of 2-mercaptobenzothiazole, di-2-benzothiazoryldisulfide and the like. Examples of thiuram-based vulcanization accelerators include tetramethylthiuram monosulfide, tetrabenzylthiuram disulfide, tetrakis(2-ethylhexyl)thiuram disulfide and the like. Examples of guanidine-based vulcanization accelerators include diphenylguanidine.

When compounding the vulcanization accelerator, a content thereof is preferably not less than 1 part by mass, more preferably not less than 2 parts by mass based on 100 parts by mass of the rubber component (A-1) from the viewpoint of achieving sufficient vulcanization. On the other hand, the content is preferably not more than 20 parts by mass, more preferably not more than 15 parts by mass from the viewpoint of securing an enough scorch time.

Specific kinds of the vulcanization accelerators may be used alone, and two or more kinds thereof may be used in combination.

The rubber composition according to one of the first embodiments can be prepared by a usual method. Namely the rubber composition can be prepared by a method of kneading the above-mentioned components with a Banbury mixer, a kneader or an open roll and then conducting vulcanization as required, or by other method.

<Application>

The rubber composition according to one of the first embodiments can be used for various applications, making the best use of characteristic thereof, and among them, can be used as rubber compositions for a tire. When using the rubber composition according to one of the first embodiments is used as a rubber composition for a tire, it can be used for various members constituting the tire, for example, for a tread including a base tread, an inner liner, a side wall and the like, and from characteristics thereof, is preferably used for a tread (a tire tread).

When the rubber composition according to one of the first embodiments is used for a tread, the tire can be produced from the rubber composition according to one of the first embodiments by a usual method. Namely, an unvulcanized tire is formed by kneading a mixture obtained by appropriately compounding the above-mentioned components as required, extrusion-processing a kneaded product to a shape of each tire member at an unvulcanized stage, and forming by a usual forming method on a tire building machine. A tire can be produced by subjecting this unvulcanized tire to heating and compressing in a vulcanizer, and by putting air in the tire, a pneumatic tire can be produced.

While not intending to be bound in any way by theory, it can be considered that an effect of using an organoaluminum compound (D-1) instead of aluminum hydroxide is exhibited as follows. Namely, while aluminum hydroxide contributes to improvement of wet grip performance, it cannot help but lower abrasion resistance since its particle size is relatively large and it does not have bonding point with the rubber. Improvement of abrasion resistance can be expected to a certain extent by making a particle size smaller. On the other hand, there is a problem such that room for improvement of wet grip performance decreases. However, an organoaluminum compound (D-1) is a compound generating aluminum hydroxide by hydrolysis, and a mode of hydrolysis thereof is similar to that of the silane coupling agent (C-1). Therefore, moisture on a surface of the filler is consumed highly efficiently in cooperation with the silane coupling agent (C-1), and a shearing strength becomes large at the time of kneading. As a result, it is considered that kneading is conducted sufficiently and dispersibility of the filler is improved. Further, it is considered that in the same manner as a reaction of the silane coupling agent (C-1), the organoaluminum compound (D-1) reacts with the rubber to enhance an effect of reinforcing the rubber, thereby improving abrasion resistance.

<Second embodiment>

The second embodiment relates to:

[1] a rubber composition comprising a starting chemical comprising a rubber component (A-2) comprising a styrene-butadiene rubber, a filler comprising silica (B1-2), a silane coupling agent (C-2) having a mercapto group and an organoaluminum compound (D-2), wherein the silane coupling agent (C-2) is at least one selected from the group consisting of a silane coupling agent comprising a linking unit A represented by the following formula (I) and a linking unit B represented by the following formula (II) and a silane coupling agent represented by the following formula (III),

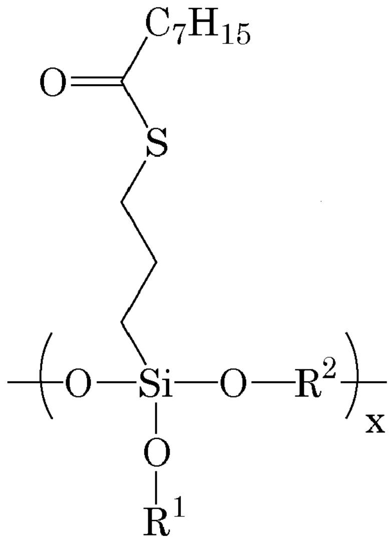

(I)

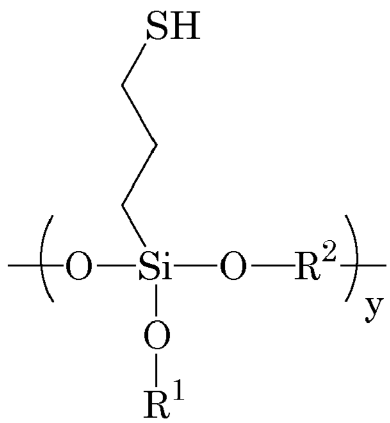

(II)

In the formulae,
x is an integer of 0 or more, and y is an integer of 1 or more.

$R^1$ represents hydrogen, halogen, a branched or un-branched alkyl group having 1 to 30 carbon atoms, a branched or un-branched alkenyl group having 2 to 30 carbon atoms, a branched or un-branched alkynyl group having 2 to 30 carbon atoms, or the alkyl group at the end of which hydrogen has been replaced by a hydroxyl group or a carboxyl group. $R^2$ represents a branched or un-branched alkylene group having 1 to 30 carbon atoms, a branched or un-branched alkenylene group having 2 to 30 carbon atoms, or a branched or un-branched alkynylene group having 2 to 30 carbon atoms. A ring structure may be formed with $R^1$ and $R^2$.

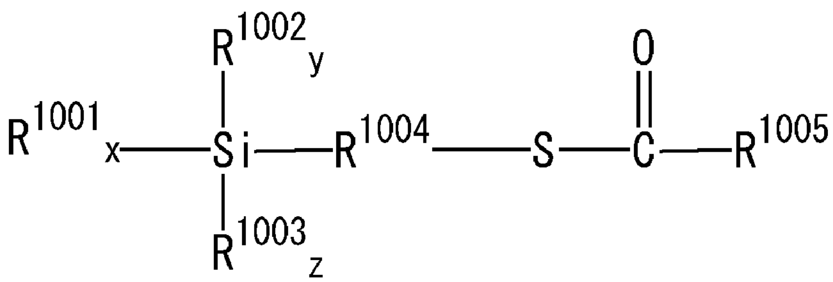

(III)

In the formula,
$R^{1001}$ is a monovalent group selected from -Cl, -Br, $-OR^{1006}$, $-O(O=)CR^{1006}$, $-ON=CR^{1006}R^{1007}$, $-ON=CR^{1006}R^{1007}$, $-NR^{1006}R^{1007}$ and $(OSiR^{1006}R^{1007})_h(OSiR^{1006}R^{1007}R^{1008})$ ($R^{1006}$, $R^{1007}$ and $R^{1008}$ may be the same or different, each of them is a hydrogen atom or a monovalent hydrocarbon group having 1 to 18 carbon atoms, and an average value of h is 1 to 4).

$R^{1002}$ is $R^{1001}$, a hydrogen atom or a monovalent hydrocarbon group having 1 to 18 carbon atoms.

$R^{1003}$ is $R^{1001}$, $R^{1002}$, a hydrogen atom, or a $[O(R^{1009}O)_j]0.5$- group ($R^{1009}$ is an alkylene group having 1 to 18 carbon atoms, j is an integer of 1 to 4).

$R^{1004}$ is a divalent hydrocarbon group having 1 to 18 carbon atoms. $R^{1005}$ is a monovalent hydrocarbon group having 1 to 18 carbon atoms. x, y and z are numerals satisfying relations of x+y+2z=3, 0≤x≤3, 0≤y≤2 and 0≤z≤1,

[2] the rubber composition of the above [1], wherein the filler further comprises carbon black (B2-2),
[3] the rubber composition of the above [2], wherein a compounding amount of the silica (B1-2) is 50 to 150 parts by mass, preferably 60 to 120 parts by mass, more preferably 60 to 110 parts by mass, a compounding amount of the carbon black (B2-2) is 5 to 50 parts by mass, preferably 5 to 35 parts by mass, more preferably 5 to 20 parts by mass, further preferably 8 to 20 parts by mass, and a compounding amount of the organoaluminum compound (D-2) is 5 to 45 parts by mass, preferably 5 to 40 parts by mass, more preferably 7 to 40 parts by mass, further preferably 10 to 40 parts by mass based on 100 parts by mass of the rubber component (A-2) and a compounding amount of the silane coupling agent (C-2) is 1 to 20 parts by mass, preferably 1.5 to 20 parts by mass, more preferably 2 to 20 parts by mass, further preferably 5 to 20 parts by mass, further preferably 5 to 15 parts by mass, further preferably 7 to 12 parts by mass based on 100 parts by mass of the silica (B1-2),
[4] the rubber composition of any of the above [1] to [3], wherein the organoaluminum compound (D-2) is an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively,
[5] a tire tread produced using the rubber composition of any of the above [1] to [4], and
[6] a tire having the tire tread of the above [5].

According to the second embodiment, a rubber composition having excellent characteristics, in particular a rubber composition for a tire having an improved breaking strength of a rubber, wet grip performance and abrasion resistance and improved fuel efficiency, and a tire tread and a tire produced using the rubber composition can be provided.

Modes for performing the second embodiment are explained below.

<Rubber component (A-2)>

The rubber component (A-2) comprises a styrene-butadiene rubber (SBR). SBR is not limited particularly, and for example, an emulsion-polymerized styrene-butadiene (E-SBR), a solution-polymerized styrene-butadiene (S-SBR), a modified styrene-butadiene thereof (modified S-SBR, modified E-SBR) and the like can be used. Examples of the modified SBR include an end-modified and/or main-chain-modified SBR, a modified SBR coupled with a tin or silicon compound or the like (such as a condensate, one having a branch structure, etc.).

A vinyl content of the SBR is preferably not less than 20 mole %, more preferably not less than 25 mole %, from the viewpoint of sufficient wet grip performance and dry grip performance. On the other hand, from the viewpoint of good abrasion resistance, the vinyl content is preferably not more than 80 mole %, more preferably not more than 70 mole %. It is noted that the vinyl content of the SBR is a value determined by an infrared absorption spectrum analysis method.

A styrene content of the SBR is preferably not less than 20% by mass, more preferably not less than 25% by mass, from the viewpoint of sufficient wet grip performance and dry grip performance. On the other hand, from the viewpoint of good abrasion resistance and temperature dependency (a state of a performance change relative to a temperature change being inhibited), the styrene content is preferably not more than 60% by mass, more preferably not more than 50% by mass, further preferably not more than 45% by mass.

A glass transition temperature (Tg) of the SBR is preferably not lower than -60°C, more preferably not lower than -50°C, from the viewpoint of sufficient wet grip performance and dry grip performance. The Tg is preferably not higher than 0°C, more preferably not higher than -10°C from the viewpoint of good initial grip performance and abrasion resistance.

An SBR content is not less than 60% by mass, preferably not less than 70% by mass, more preferably not less than 80% by mass, more preferably not less than 90% by mass, most preferably 100% by mass based on 100% by mass of the rubber component (A-2), from the viewpoint of sufficient heat resistance and abrasion resistance.

Rubber components other than the SBR may be compounded as the rubber component (A-2). Examples of such other rubber component include diene rubbers such as a natural rubber (NR), a butadiene rubber (BR), an isoprene rubber (IR), a styrene-isoprene-butadiene rubber (SIBR), a chloroprene rubber (CR) and an acrylonitrile-butadiene rubber (NBR), non-diene rubbers such as an ethylene-propylene-diene rubber (EPDM), a butyl rubber (IIR) and a

halogenated butyl rubber (X-IIR), and the like. A specific kind of these other rubber components may be used alone, or two or more kinds thereof may be used in combination.

<Filler>

The filler comprises silica (B1-2). This is because when the filler comprises silica (B1-2), improvement of wet grip performance and fuel efficiency can be expected. For example, silica prepared by a dry method (anhydrous silica), silica prepared by a wet method (hydrous silica) and the like can be used as the silica (B1-2). In particular, for the reason that the number of silanol groups is large, silica prepared by a wet method is preferable.

A nitrogen adsorption BET specific surface area ($N_2SA$) of the silica (B1-2) is preferably not less than 50 $m^2/g$, more preferably not less than 70 $m^2/g$, more preferably not less than 100 $m^2/g$, more preferably not less than 120 $m^2/g$, further preferably not less than 150 $m^2/g$, from the viewpoint of improvement of fuel efficiency and abrasion resistance resulting from improvement of reinforcing property. On the other hand, from the viewpoint of securing good dispersibility and inhibiting agglomeration, the $N_2SA$ of the silica (B1-2) is preferably not more than 500 $m^2/g$, preferably not more than 400 $m^2/g$, more preferably not more than 300 $m^2/g$.

The $N_2SA$ of the silica (B1-2) is a value measured in accordance with ASTM D3037-81.

A specific kind of the silica (B1-2) may be used alone, or two or more kinds thereof may be used in combination.

Any of fillers which are used usually in this field can be used suitably as a filler other than the silica (B1-2) unless contradictory to the purpose of the second embodiment, and examples of such a filler include carbon black (B2-2). By compounding the carbon black (B2-2), improvement of abrasion resistance can be expected. The filler comprising the silica (B1-2) and the carbon black (B2-2) is preferable.

For example, there are carbon black produced by an oil furnace method and the like as the carbon black (B2-2), and two or more kinds of carbon black having different colloidal properties may be used in combination. Examples thereof include those of GPF, HAF, ISAF, SAF grades, and the like.

A nitrogen adsorption specific surface area ($N_2SA$) of the carbon black (B2-2) is preferably 70 to 250 $m^2/g$, more preferably 110 to 200 $m^2/g$, for the reason that good wet grip performance, dry grip performance and abrasion resistance can be obtained. A dibutyl phthalate oil absorption (DBP) of the carbon black (B2-2) is preferably 50 to 250 ml/100 g for the same reason. It is noted that the $N_2SA$ of the carbon black (B2-2) is a value determined in accordance with JIS K6217-2: 2001, and the DPB is a value determined in accordance with JIS K6217-4: 2001.

A specific kind of the carbon black (B2-2) may be used alone, or two or more kinds thereof may be used in combination.

A compounding amount of the silica (B1-2) is not less than 50 parts by mass, preferably not less than 60 parts by mass based on 100 parts by mass of the rubber component (A-2) from the viewpoint of sufficient wet grip performance. On the other hand, the compounding amount is not more than 150 parts by mass, preferably not more than 120 parts by mass, more preferably not more than 110 parts by mass from the viewpoint of its good dispersion, in its turn good abrasion resistance.

When compounding the carbon black (B2-2), a compounding amount thereof is preferably not less than 5 parts by mass, more preferably not less than 8 parts by mass based on 100 parts by mass of the rubber component (A-2) from the viewpoint of good wet grip performance, dry grip performance and abrasion resistance. On the other hand, the compounding amount is preferably not more than 50 parts by mass, more preferably not more than 35 parts by mass, further preferably not more than 20 parts by mass from the viewpoint of maintaining good wet grip performance.

A compounding amount of the filler is preferably not less than 50 parts by mass, preferably not less than 55 parts by mass, more preferably not less than 65 parts by mass based on 100 parts by mass of the rubber component (A-2) from the viewpoint of good wet grip performance, dry grip performance and abrasion resistance. On the other hand, the compounding amount is not more than 170 parts by mass, more preferably not more than 150 parts by mass, further preferably not more than 120 parts by mass from the viewpoint of good wet grip performance and abrasion resistance. A proportion of the silica (B1-2) in the whole filler is preferably not less than 70% by mass, more preferably not less than 75% by mass, more preferably not less than 80% by mass, from the viewpoint of exhibiting an effect of the second embodiment satisfactorily. On the other hand, the proportion is not more than 95% by mass, more preferably not more than 90% by mass from the same reason as mentioned above.

When the filler consists of the silica (B1-2) and the carbon black (B2-2), the compounding amount of the carbon black (B2-2) may be determined from the above-mentioned "total amount of the filler" and the "compounding amount of the silica (B1-2)" or the compounding amount of the silica (B1-2) may be determined from the above-mentioned "total amount of the filler" and the "compounding amount of the carbon black (B2-2).

<Silane coupling agent (C-2)>

The silane coupling agent (C-2) is a silane coupling agent having a mercapto group and is at least one selected

from the group consisting of a silane coupling agent comprising a linking unit A represented by the following formula (I) and a linking unit B represented by the following formula (II) and a silane coupling agent represented by the following formula (III).

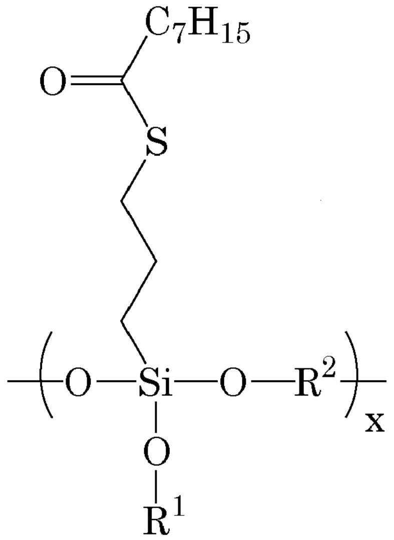

(I)

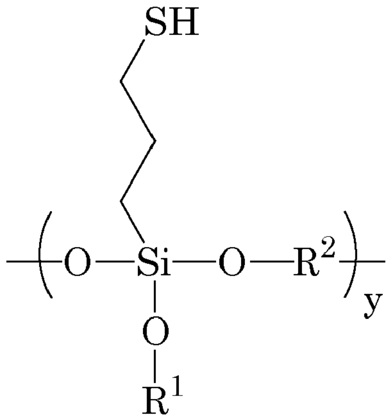

(II)

In the formulae,
x is an integer of 0 or more, and y is an integer of 1 or more.

$R^1$ represents hydrogen, halogen, a branched or un-branched alkyl group having 1 to 30 carbon atoms, a branched or un-branched alkenyl group having 2 to 30 carbon atoms, a branched or un-branched alkynyl group having 2 to 30 carbon atoms, or the alkyl group at the end of which hydrogen has been replaced by a hydroxyl group or a carboxyl group. $R^2$ represents a branched or un-branched alkylene group having 1 to 30 carbon atoms, a branched or un-branched alkenylene group having 2 to 30 carbon atoms, or a branched or un-branched alkynylene group having 2 to 30 carbon atoms. A ring structure may be formed with $R^1$ and $R^2$.

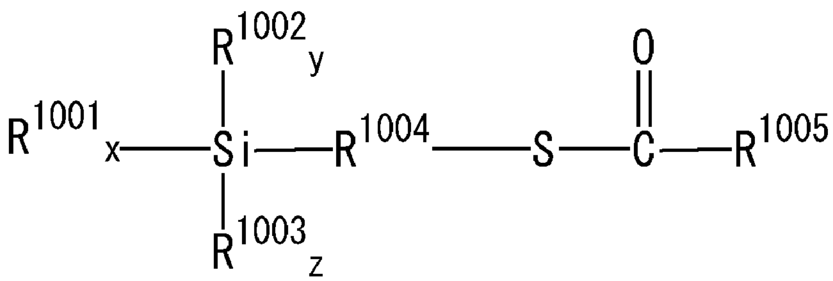

(III)

In the formula,

$R^{1001}$ is a monovalent group selected from -Cl, -Br, -$OR^{1006}$, -O(O=)$CR^{1006}$, -ON=$CR^{1006}R^{1007}$, -ON=$CR^{1006}R^{1007}$, -$NR^{1006}R^{1007}$ and $(OSiR^{1006}R^{1007})_h(OSiR^{1006}R^{1007}R^{1008})$ ($R^{1006}$, $R^{1007}$ and $R^{1008}$ may be the same or different, each of them is a hydrogen atom or a monovalent hydrocarbon group having 1 to 18 carbon atoms, and an average value of h is 1 to 4).

$R^{1002}$ is $R^{1001}$, a hydrogen atom or a monovalent hydrocarbon group having 1 to 18 carbon atoms.

$R^{1003}$ is $R^{1001}$, $R^{1002}$, a hydrogen atom, or a $[O(R^{1009}O)_j]0.5$- group ($R^{1009}$ is an alkylene group having 1 to 18 carbon atoms, j is an integer of 1 to 4).

$R^{1004}$ is a divalent hydrocarbon group having 1 to 18 carbon atoms. $R^{1005}$ is a monovalent hydrocarbon group having 1 to 18 carbon atoms. x, y and z are numerals satisfying relations of $x+y+2z=3$, $0\leq x\leq 3$, $0\leq y\leq 2$ and $0\leq z\leq 1$.

These silane coupling agents (C-2) according to the second embodiment has a sulfide moiety of C-S-C bond, and therefore is thermally stable as compared with a polysulfide silane such as bis-(3-triethoxysilylpropyl) tetrasulfide. Therefore, the silane coupling agent (C-2) has a characteristic such that it can be kneaded at a higher temperature. Therefore, alcohol generated by the hydrolysis of the organoaluminum compound described later can be removed sufficiently at the time of kneading. Further, when using the thermally stable silane coupling agent (C-2) according to the second embodiment, there are merits such that increase in a Mooney viscosity is less and increase in a viscosity during processing is inhibited. Furthermore, in the silane coupling agent (C-2) according to the second embodiment, shortening of a scorching time is inhibited as compared with mercaptosilanes such as 3-mercaptopropyltrimethoxysilane. The silane coupling agent (C-2) comprising the linking unit A and the linking unit B has a mercaptosilane structure in the linking unit B. It can be considered that this is because a -$C_7H_{15}$ moiety of the linking unit A covers a -SH group of the linking unit B and as a result, the silane coupling agent (C-2) is hard to react with a polymer and scorching is hardly generated.

The silane coupling agent (C-2) comprising the linking unit A represented by the formula (I) and the linking unit B represented by the formula (II) will be explained below.

From the viewpoint that the above-mentioned effects of inhibiting increase in a viscosity during the processing and inhibiting shortening of a scorching time can be enhanced, in the silane coupling agent (C-2) having the above-mentioned structure, a content of the linking unit A is preferably not less than 30 mole %, more preferably not less than 50 mole %, and preferably not more than 99 mole %, more preferably not more than 90 mole %. Further, a content of the linking unit B is preferably not less than 1 mole %, more preferably not less than 5 mole %, further preferably not less than 10 mole %, and preferably not more than 70 mole %, more preferably not more than 65 mole %, further preferably not more than 55 mole %. Further, a total content of the linking units A and B is preferably not less than 95 mole %, more preferably not less than 98 mole %, particularly preferably 100 mole %. It is noted that the content of the linking units A and B is a content in the case of the linking units A and B are located at the ends of the silane coupling agent (C-2). A form in the case of the linking units A and B being located at the ends of the silane coupling agent (C-2) is not limited particularly, and a unit corresponding to the formulae (1) and (2) showing the linking units A and B may be formed.

Examples of halogen of $R^1$ include chlorine, bromine and fluorine.

Examples of the branched or un-branched alkyl group having 1 to 30 carbon atoms of $R^1$ include methyl, ethyl, n-propyl, isopropyl, n-butyl, iso-butyl, sec-butyl, tert-butyl, pentyl, hexyl, heptyl, 2-ethylhexyl, octyl, nonyl, decyl and the like. The number of carbon atoms of the alkyl group is preferably 1 to 12.

Examples of the branched or un-branched alkenyl group having 2 to 30 carbon atoms of $R^1$ include vinyl, 1-propenyl, 2-propenyl, 1-butenyl, 2-butenyl, 1-pentenyl, 2-pentenyl, 1-hexenyl, 2-hexenyl, 1-octenyl and the like. The number of carbon atoms of the alkenyl group is preferably 2 to 12.

Examples of the branched or un-branched alkynyl group having 2 to 30 carbon atoms of $R^1$ include ethynyl, propynyl, butynyl, pentynyl, hexynyl, heptynyl, octynyl, nonynyl, decynyl, undecynyl, dodecynyl and the like. The number of carbon atoms of the alkynyl group is preferably 2 to 12.

Examples of the branched or un-branched alkylene group having 1 to 30 carbon atoms of $R^2$ include ethylene, propylene, butylene, pentylene, hexylene, heptylene, octylene, nonylene, decylene, undecylene, dodecylene, tridecylene, tetradecylene, pentadecylene, hexadecylene, heptadecylene, octadecylene and the like. The number of carbon atoms of the alkylene group is preferably 1 to 12.

Examples of the branched or un-branched alkenylene group having 2 to 30 carbon atoms of $R^2$ include vinylene, 1-propenylene, 2-propenylene, 1-butenylene, 2-butenylene, 1-pentenylene, 2-pentenylene, 1-hexenylene, 2-hexenylene, 1-octenylene and the like. The number of carbon atoms of the alkenylene group is preferably 2 to 12.

Examples of the branched or un-branched alkynylene group having 2 to 30 carbon atoms of $R^2$ include ethynylene, propynylene, butynylene, pentynylene, hexynylene, heptynylene, octynylene, nonynylene, decynylene, undecynylene, dodecynylene and the like. The number of carbon atoms of the alkynylene group is preferably 2 to 12.

In the silane coupling agent (C-2) comprising the linking unit A represented by the formula (I) and the linking unit B represented by the formula (II), the total number of repetitions (x+y) including the number of repetitions (x) of the linking unit A and the number of repetitions (y) of the linking unit B is preferably within a range of 3 to 300. When the

total number of repetitions is within this range, since a $-C_7H_{15}$ moiety of the linking unit A covers mercaptosilane of the linking unit B, shortening of a scorching time can be inhibited and in addition, good reactivity with the silica (B1-2) and the rubber component (A-2) can be secured.

Examples of the usable silane coupling agent (C-2) comprising the linking unit A represented by the formula (I) and the linking unit B represented by the formula (II) include NXT-Z30, NXT-Z45 and NXT-Z60 available from Momentive Performance Materials Inc. and the like.

The silane coupling agent (C-2) represented by the formula (III) will be explained below.

In the above-mentioned formula (III), it is preferable that $R^{1005}$, $R^{1006}$, $R^{1007}$ and $R^{1008}$ are independently groups selected from the group consisting of linear, cyclic or branched alkyl groups, alkenyl groups, aryl groups and aralkyl groups having 1 to 18 carbon atoms. Further, when $R^{1002}$ is a monovalent hydrocarbon group having 1 to 18 carbon atoms, preferable are groups selected from the group consisting of linear, cyclic or branched alkyl groups, alkenyl groups, aryl groups and aralkyl groups. $R^{1009}$ is preferably a linear, cyclic or branched alkylene group, and especially a linear one is preferable. Examples of $R^{1004}$ include an alkylene group having 1 to 18 carbon atoms, an alkenylene group having 2 to 18 carbon atoms, a cycloalkylene group having 5 to 18 carbon atoms, a cycloalkylalkylene group having 6 to 18 carbon atoms, an arylene group having 6 to 18 carbon atoms and an aralkylene group having 7 to 18 carbon atoms. The above-mentioned alkylene group and alkenylene group may be either of linear one or branched one, and the above-mentioned cycloalkylene group, cycloalkylalkylene group, arylene group and aralkylene group may have a functional group such as a lower alkyl group on a ring thereof. The $R^{1004}$ is preferably an alkylene group having 1 to 6 carbon atoms, and especially linear alkylene groups, for example, methylene, ethylene, trimethylene, tetramethylene, pentamethylene and hexamethylene are preferable.

In the above-mentioned formula (III), examples of $R^{1002}$, $R^{1005}$, $R^{1006}$, $R^{1007}$ and $R^{1008}$ include methyl, ethyl, n-propyl, isopropyl, n-butyl, iso-butyl, sec-butyl, tert-butyl, pentyl, hexyl, octyl, decyl, dodecyl, cyclopentyl, cyclohexyl, vinyl, propenyl, allyl, hexenyl, octenyl, cyclopentenyl, cyclohexenyl, phenyl, tolyl, xylyl, naphthyl, benzyl, phenethyl, naphthylmethyl and the like. In the above-mentioned formula (III), examples of the linear alkylene groups of $R^{1009}$ include methylene, ethylene, n-propylene, n-butylene and hexylene and examples of the branched alkylene groups include isopropylene, isobutylene and 2-methylpropylene.

Examples of the silane coupling agent (C-2) represented by the above-mentioned formula (III) include 3-hexanoylthiopropyltriethoxysilane, 3-octanoylthiopropyltriethoxysilane, 3-decanoylthiopropyltriethoxysilane, 3-lauroylthiopropyltriethoxysilane, 2-hexanoylthioethyltriethoxysilane, 2-octanoylthioethyltriethoxysilane, 2-decanoylthioethyltriethoxysilane, 2-lauroylthioethyltriethoxysilane, 3-hexanoylthiopropyltrimethoxysilane, 3-octanoylthiopropyltrimethoxysilane, 3-decanoylthiopropyltrimethoxysilane, 3-lauroylthiopropyltrimethoxysilane, 2-hexanoylthioethyltrimethoxysilane, 2-octanoylthioethyltrimethoxysilane, 2-decanoylthioethyltrimethoxysilane, 2-lauroylthioethyltrimethoxysilane and the like. Among these, 3-octanoylthiopropyltriethoxysilane (NXT Silane available from Momentive Performance Materials Inc.) is particularly preferred.

A compounding amount of the silane coupling agent (C-2) is preferably not less than 1 part by mass, more preferably not less than 1.5 parts by mass, more preferably not less than 2 parts by mass, more preferably not less than 5 parts by mass, more preferably not less than 7 parts by mass based on 100 parts by mass of the silica (B1-2) from the viewpoint of good abrasion resistance. On the other hand, the compounding amount is preferably not more than 20 parts by mass, more preferably not more than 15 parts by mass, more preferably not more than 12 parts by mass from the viewpoint of obtaining an effect of improvement for increase in cost.

Specific kinds of the silane coupling agents (C-2) may be used alone, and two or more kinds thereof may be used in combination.

<Organoaluminum compound (D-2)>

The organoaluminum compound (D-2) is a complex comprising aluminum and an organic compound, and is one generating aluminum hydroxide by a hydrolysis reaction. Therefore, when such an organoaluminum compound (D-2) is compounded, at least a part of the organoaluminum compound (D-2) is subject to hydrolysis during kneading, resulting in generation of aluminum hydroxide.

Example of such organoaluminum compound (D-2) includes an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively. Here, the aliphatic hydrocarbon groups are those having a branched or non-branched alkyl group, alkenyl group or alkynyl group as a skeleton and may have a hetero atom such as an oxygen atom, a nitrogen atom and the like. Preferable aliphatic hydrocarbon groups are those having 1 to 12 carbon atoms ($C_{1-12}$) (However, in the case of having an alkenyl group or an alkynyl

group as a skeleton, it is necessary that the lower limit of the number of carbon atoms is at least two. Hereinafter the same.), more preferably $C_{1-10}$, more preferably $C_{1-8}$, more preferably $C_{2-6}$. Examples of aliphatic hydrocarbon group represented by $R^a$, $R^b$ or $R^c$ include an ethyl group ($C_2$), an isopropyl group ($C_3$), a sec-butyl group ($C_4$), 3-ethoxycarbonyl-2-propen-2-yl group ($C_6$) and the like.

Examples of the aluminum alcolate include aluminum ethylate, aluminum isopropylate, aluminum diisopropylate mono sec-butyrate, aluminum sec-butyrate, aluminum ethylacetoacetate diisopropylate, aluminum tris-(acetylacetonate) and the like.

A compounding amount of the organoaluminum compound (D-2) is preferably not less than 5 parts by mass, more preferably not less than 7 parts by mass, more preferably not less than 10 parts by mass based on 100 parts by mass of the rubber component (A-2) from the viewpoint of good wet grip performance and abrasion resistance. On the other hand, the compounding amount is preferably not more than 45 parts by mass, more preferably not more than 40 parts by mass for the same reason as mentioned above.

Specific kinds of the organoaluminum compound (D-2) may be used alone, and two or more kinds thereof may be used in combination.

Besides the above-mentioned components, other components commonly used in the tire industry, for example, softening agents, antioxidants, waxes, stearic acid, zinc oxide, vulcanizing agent such as sulfur, vulcanization accelerators and the like can be optionally compounded in the rubber composition according to one of the second embodiments.

By compounding a softening agent, enhancement of wet grip performance, dry grip performance and initial grip performance can be expected. The softening agent is not limited particularly, and example thereof includes oils. Examples of the oil include process oils such as a paraffin process oil, an aromatic process oil and a naphthenic process oil. When the oil is compounded, a compounding amount thereof is preferably not less than 20 parts by mass, more preferably not less than 25 parts by mass based on 100 parts by mass of the rubber component (A-2) from the viewpoint of obtaining a sufficient effect resulting from the addition thereof. On the other hand, the compounding amount thereof is preferably not more than 70 parts by mass, more preferably not more than 60 parts by mass from the viewpoint of maintaining abrasion resistance. It is noted that herein the content of oil includes an amount of oil included in an oil-extended rubber.

Specific kinds of the softening agents may be used alone, and two or more kinds thereof may be used in combination.

Examples of vulcanization accelerators include sulfeneamide-based, thiazole-based, thiuram-based and guanidine-based vulcanization accelerators. Examples of sulfeneamide-based vulcanization accelerators include N-cyclohexyl-2-benzothiazylsulfeneamide, N,N-dicyclohexyl-2-benzothiazylsulfeneamide, N-ter-butyl-2-benzothiazylsulfeneamide and the like. Examples of thiazole-based vulcanization accelerators include 2-mercaptobenzothiazole, cyclohexylamine salt of 2-mercaptobenzothiazole, di-2-benzothiazoryldisulfide and the like. Examples of thiuram-based vulcanization accelerators include tetramethylthiuram monosulfide, tetrabenzylthiuram disulfide, tetrakis(2-ethylhexyl)thiuram disulfide and the like. Examples of guanidine-based vulcanization accelerators include diphenylguanidine.

When compounding the vulcanization accelerator, a content thereof is preferably not less than 1 part by mass, more preferably not less than 2 parts by mass based on 100 parts by mass of the rubber component (A-2) from the viewpoint of achieving sufficient vulcanization. On the other hand, the content is preferably not more than 20 parts by mass, more preferably not more than 15 parts by mass from the viewpoint of securing an enough scorch time.

Specific kinds of the vulcanization accelerators may be used alone, and two or more kinds thereof may be used in combination.

The rubber composition according to one of the second embodiments can be prepared by a usual method. Namely the rubber composition can be prepared by a method of kneading the above-mentioned components with a Banbury mixer, a kneader or an open roll and then conducting vulcanization as required, or by other method.

<Application>

The rubber composition according to one of the second embodiments can be used for various applications, making the best use of characteristic thereof, and among them, can be used as rubber compositions for a tire. When using the rubber composition according to the second embodiments is used for a rubber composition for a tire, it can be used for various members constituting the tire, for example, for a tread including a base tread, an inner liner, a side wall and the like, and from characteristics thereof, is preferably used for a tread (a tire tread).

When using the rubber composition according to one of the second embodiments is used for a tread, the tire can be produced from the rubber composition according to one of the second embodiments by a usual method. Namely, an un-vulcanized tire is formed by kneading a mixture obtained by appropriately compounding the above-mentioned components as required, extrusion-processing a kneaded product to a shape of each tire member at an unvulcanized stage, and forming by a usual forming method on a tire building machine. A tire can be produced by subjecting this unvulcanized tire to heating and compressing in a vulcanizer, and by putting air in the tire, a pneumatic tire can be

produced.

While not intending to be bound in any way by theory, it can be considered that an effect of using an organoaluminum compound (D-2) instead of aluminum hydroxide is exhibited as follows. Namely, while aluminum hydroxide contributes to improvement of wet grip performance, it cannot help but lower abrasion resistance since its particle size is relatively large and it does not have bonding point with the rubber. Improvement of abrasion resistance can be expected to a certain extent by making a particle size smaller On the other hand, there is a problem such that room for improvement of wet grip performance decreases. However, an organoaluminum compound (D-2) is a compound generating aluminum hydroxide by hydrolysis, and a mode of hydrolysis thereof is similar to that of the silane coupling agent (C-2). Therefore, moisture on a surface of the filler is consumed highly efficiently in cooperation with the silane coupling agent (C-2), and a shearing strength becomes large at the time of kneading. As a result, it is considered that kneading is conducted sufficiently and dispersibility of the filler is improved. Further, it is considered that in the same manner as a reaction of the silane coupling agent (C-2), the organoaluminum compound (D-2) reacts with the rubber to enhance an effect of reinforcing the rubber, thereby improving abrasion resistance.

In one of the second embodiments, since a specific thermally stable silane coupling agent (C-2) is used, the kneading can be performed at a higher temperature. Therefore, it becomes easy to sufficiently remove, at the kneading stage, alcohol generated by hydrolysis of the organoaluminum compound (D-2). Unless alcohol cannot be removed sufficiently, much amount of alcohol vapor is generated at the time of vulcanization and there occurs a problem such that a volume of the rubber composition is increased due to an influence of the vapor. Therefore, enabling alcohol to be removed before the vulcanization is one of merits of the second embodiment.

<Third embodiment>

The third embodiment relates to:

[1] a rubber composition comprising a starting chemical comprising a rubber component (A-3) comprising a styrene-butadiene rubber, a filler comprising silica (B1-3) having a CTAB specific surface area of not less than 100 $m^2/g$, preferably not less than 165 $m^2/g$, more preferably not less than 170 $m^2/g$ and a nitrogen adsorption BET specific surface area of not less than 110 $m^2/g$, preferably not less than 175 $m^2/g$, more preferably not less than 180 $m^2/g$, a silane coupling agent (C-3) and an organoaluminum compound (D-3),
[2] the rubber composition of the above [1], wherein the filler further comprises carbon black (B2-3),
[3] the rubber composition of the above [2], wherein a compounding amount of the silica (B1-3) is 50 to 150 parts by mass, preferably 60 to 120 parts by mass, more preferably 60 to 110 parts by mass, a compounding amount of the carbon black (B2-3) is 5 to 50 parts by mass, preferably 5 to 35 parts by mass, more preferably 5 to 20 parts by mass, further preferably 8 to 20 parts by mass, and a compounding amount of the organoaluminum compound (D-3) is 5 to 45 parts by mass, preferably 5 to 40 parts by mass, more preferably 7 to 40 parts by mass, further preferably 10 to 40 parts by mass based on 100 parts by mass of the rubber component (A-3), and a compounding amount of the silane coupling agent (C-3) is 1 to 20 parts by mass, preferably 1.5 to 20 parts by mass, more preferably 2 to 20 parts by mass, further preferably 5 to 20 parts by mass, further preferably 5 to 15 parts by mass, further preferably 7 to 12 parts by mass based on 100 parts by mass of the silica (B1-3),
[4] the rubber composition of any of the above [1] to [3], wherein the CTAB specific surface area of the silica (B1-3) is 180 to 600 $m^2/g$, preferably 190 to 300 $m^2/g$, more preferably 195 to 300 $m^2/g$, further preferably 195 to 250 $m^2/g$, further preferably 197 to 250 $m^2/g$, and the nitrogen adsorption BET specific surface area is 185 to 600 $m^2/g$, preferably 190 to 300 $m^2/g$, more preferably 195 to 300 $m^2/g$, further preferably 200 to 300 $m^2/g$, further preferably 200 to 260 $m^2/g$, further preferably 210 to 260 $m^2/g$,
[5] the rubber composition of any of the above [1] to [4], wherein the organoaluminum compound (D-3) is an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively,
[6] a tire tread produced using the rubber composition of any of the above [1] to [5], and
[7] a tire having the tire tread of the above [6].

According to the third embodiment, a rubber composition having excellent characteristics, in particular a rubber composition for a tire having improved breaking strength of rubber, wet grip performance and abrasion resistance and improved fuel efficiency, and a tire tread and a tire produced using the rubber composition can be provided.

Modes for performing the third embodiment will be explained below.

<Rubber component (A-3)>

The rubber component (A-3) comprises a styrene-butadiene rubber (SBR). SBR is not limited particularly, and for example, an emulsion-polymerized styrene-butadiene (E-SBR), a solution-polymerized styrene-butadiene (S-SBR), a modified styrene-butadiene thereof (modified S-SBR, modified E-SBR) and the like can be used. Examples of the modified SBR include an end-modified and/or main-chain-modified SBR, a modified SBR coupled with a tin or silicon compound or the like (such as a condensate, one having a branch structure, etc.).

A vinyl content of the SBR is preferably not less than 20 mole %, more preferably not less than 25 mole %, from the viewpoint of sufficient wet grip performance and dry grip performance. On the other hand, from the viewpoint of good abrasion resistance, the vinyl content is preferably not more than 80 mole %, more preferably not more than 70 mole %. It is noted that the vinyl content of the SBR is a value determined by an infrared absorption spectrum analysis method.

A styrene content of the SBR is preferably not less than 20% by mass, more preferably not less than 25% by mass, from the viewpoint of sufficient wet grip performance and dry grip performance. On the other hand, from the viewpoint of good abrasion resistance and temperature dependency (a state of a performance change relative to a temperature change being inhibited), the styrene content is preferably not more than 60% by mass, more preferably not more than 50% by mass, further preferably not more than 45% by mass.

A glass transition temperature (Tg) of the SBR is preferably not lower than -60°C, more preferably not lower than -50°C, from the viewpoint of sufficient wet grip performance and dry grip performance. The Tg is preferably not higher than 0°C, more preferably not higher than -10°C from the viewpoint of good initial grip performance and abrasion resistance.

An SBR content is not less than 60% by mass, preferably not less than 70% by mass, more preferably not less than 80% by mass, more preferably not less than 90% by mass, most preferably 100% by mass based on 100% by mass of the rubber component (A-3), from the viewpoint of sufficient heat resistance and abrasion resistance.

Rubber components other than the SBR may be compounded as the rubber component (A-3). Examples of such other rubber component include diene rubbers such as a natural rubber (NR), a butadiene rubber (BR), an isoprene rubber (IR), a styrene-isoprene-butadiene rubber (SIBR), a chloroprene rubber (CR) and an acrylonitrile-butadiene rubber (NBR), non-diene rubbers such as an ethylene-propylene-diene rubber (EPDM), a butyl rubber (IIR) and a halogenated butyl rubber (X-IIR), and the like. A specific kind of these other rubber components may be used alone, or two or more kinds thereof may be used in combination.

<Filler>

The filler comprises silica (B1-3). This is because when the filler comprises silica (B1-3), improvement of wet grip performance and fuel efficiency can be expected. For example, silica prepared by a dry method (anhydrous silica), silica prepared by a wet method (hydrous silica) and the like can be used as the silica (B1-3). In particular, for the reason that the number of silanol groups is large, silica prepared by a wet method is preferable.

The silica (B1-3) used in one of the third embodiments is one having a CTAB (cetyltrimethylammonium bromide) specific surface area of not less than 160 $m^2/g$ and a nitrogen adsorption BET specific surface area ($N_2SA$) of not less than 170 $m^2/g$ (hereinafter also referred to as "fine particle silica"). In the case where such fine particle silica is used, there is a concern abut deterioration of processability. However, in one of the third embodiments, since the organoaluminum compound (D-3) is used together, dispersibility of the filler described infra is enhanced and it becomes possible to sufficiently derive advantages resulting from addition of silica, namely, improvement of fuel efficiency and improvement of abrasion resistance resulting from improved reinforceability.

The CTAB specific surface area of the fine particle silica (B1-3) is preferably not less than 165 $m^2/g$, more preferably not less than 170 $m^2/g$, more preferably not less than 180 $m^2/g$, more preferably not less than 190 $m^2/g$, more preferably not less than 195 $m^2/g$, further preferably not less than 197 $m^2/g$. On the other hand, the CTAB specific surface area is preferably not more than 600 $m^2/g$, more preferably not more than 300 $m^2/g$, further preferably not more than 250 $m^2/g$ from the viewpoint of securing good dispersibility and inhibiting agglomeration. It is noted that the CTAB specific surface area is measured in accordance with ASTM D3765-92.

The BET specific surface area of the fine particle silica (B1-3) is preferably not less than 175 $m^2/g$, more preferably not less than 180 $m^2/g$, more preferably not less than 190 $m^2/g$, more preferably not less than 195 $m^2/g$, more preferably not less than 200 $m^2/g$, further preferably not less than 210 $m^2/g$. On the other hand, the BET specific surface area is preferably not more than 600 $m^2/g$, more preferably not more than 300 $m^2/g$, further preferably not more than 260 $m^2/g$ from the viewpoint of securing good dispersibility and inhibiting agglomeration. It is noted that the BET specific surface area of the silica (B1-3) is measured in accordance with ASTM D3037-81.

An average primary particle size of the fine particle silica (B1-3) is preferably not more than 20 nm, more preferably not more than 17 nm, further preferably not more than 16 nm, particularly preferably not more than 15 nm. A

lower limit of the average primary particle size is not limited particularly, and is preferably not less than 3 nm, more preferably not less than 5 nm, further preferably not less than 7 nm. While having such a small average primary particle size, the silica aggregates to form a structure like carbon black and dispersibility of the silica (B1-3) can be improved more, thereby further improving reinforceability and abrasion resistance. It is noted that the average primary particle size of the fine particle silica (B1-3) can be obtained by observing with a transmission electron microscope or a scanning electron microscope, measuring primary particle sizes of 400 or more silica particles observed within a visual field, and calculating an average thereof.

A specific kind of the silica (B1-3) may be used alone, or two or more kinds thereof may be used in combination. Such a combination include combination of the fine particle silica and other kind of silica.

Any of fillers which are used usually in this field can be used suitably as a filler other than the silica (B1-3) unless contradictory to the purpose of the third embodiment, and examples of such a filler include carbon black (B2-3). By compounding the carbon black (B2-3), improvement of abrasion resistance can be expected. The filler comprising the silica (B1-3) and the carbon black (B2-3) is preferable.

For example, there are carbon black produced by an oil furnace method and the like as the carbon black (B2-3), and two or more kinds of carbon black having different colloidal properties may be used in combination. Examples thereof include those of GPF, HAF, ISAF, SAF grades, and the like.

A nitrogen adsorption specific surface area ($N_2SA$) of the carbon black (B2-3) is preferably 70 to 250 $m^2/g$, more preferably 110 to 200 $m^2/g$, for the reason that good wet grip performance, dry grip performance and abrasion resistance can be obtained. A dibutyl phthalate oil absorption (DBP) of the carbon black (B2-3) is preferably 50 to 250 ml/100 g for the same reason. It is noted that the $N_2SA$ of the carbon black (B2-3) is a value determined in accordance with JIS K6217-2: 2001, and the DPB is a value determined in accordance with JIS K6217-4: 2001.

A specific kind of the carbon black (B2-3) may be used alone, or two or more kinds thereof may be used in combination.

A compounding amount of the silica (B1-3) is not less than 50 parts by mass, preferably not less than 60 parts by mass based on 100 parts by mass of the rubber component (A-3) from the viewpoint of sufficient wet grip performance. On the other hand, the compounding amount is not more than 150 parts by mass, preferably not more than 120 parts by mass, more preferably not more than 110 parts by mass from the viewpoint of its good dispersion, and furthe good abrasion resistance.

When compounding the carbon black (B2-3), a compounding amount thereof is preferably not less than 5 parts by mass, more preferably not less than 8 parts by mass based on 100 parts by mass of the rubber component (A-3) from the viewpoint of good wet grip performance, dry grip performance and abrasion resistance. On the other hand, the compounding amount is preferably not more than 50 parts by mass, more preferably not more than 35 parts by mass, further preferably not more than 20 parts by mass from the viewpoint of maintaining good wet grip performance.

A compounding amount of the filler is preferably not less than 50 parts by mass, preferably not less than 55 parts by mass, more preferably not less than 65 parts by mass based on 100 parts by mass of the rubber component (A-3) from the viewpoint of good wet grip performance, dry grip performance and abrasion resistance. On the other hand, the compounding amount is not more than 170 parts by mass, more preferably not more than 150 parts by mass, further preferably not more than 120 parts by mass from the viewpoint of good wet grip performance and abrasion resistance. A proportion of the silica (B1-3) in the whole filler is preferably not less than 70% by mass, more preferably not less than 75% by mass, more preferably not less than 80% by mass, from the viewpoint of exhibiting an effect of the third embodiment satisfactorily. On the other hand, the proportion is not more than 95% by mass, more preferably not more than 90% by mass from the same reason as mentioned above.

When the filler consists of the silica (B1-3) and the carbon black (B2-3), the compounding amount of the carbon black (B2-3) may be determined from the above-mentioned "total amount of the filler" and the "compounding amount of the silica (B1-3)" or the compounding amount of the silica (B1-3) may be determined from the above-mentioned "total amount of the filler" and the "compounding amount of the carbon black (B2-3).

<Silane coupling agent (C-3)>

The silane coupling agent (C-3) is not limited particularly, and any of silane coupling agents which are usually used in this field can be used properly. Examples of such a silane coupling agent (C-3) are bis(3-triethoxysilylpropyl)polysulfide, bis(2-triethoxysilylethyl)polysulfide, bis(3-trimethoxysilylpropyl)polysulfide, bis(2-trimethoxysilylethyl)polysulfide, bis(4-triethoxysilylbuyl)polysulfide, bis(4-trimethoxysilylbutyl)polysulfide, and the like. Among these, bis(3-triethoxysilylpropyl)polysulfide, and bis(2-triethoxysilylethyl)polysulfide are preferable, and bis(3-triethoxysilylpropyl)tetrasulfide, and bis(2-triethoxysilylethyl)tetrasulfide are more preferable.

A compounding amount of the silane coupling agent (C-3) is preferably not less than 1 part by mass, more preferably not less than 1.5 parts by mass, more preferably not less than 2 parts by mass, preferably not less than 5 parts by mass, more preferably not less than 7 parts by mass based on 100 parts by mass of the silica (B1-3) from the

viewpoint of good abrasion resistance. On the other hand, the compounding amount is preferably not more than 20 parts by mass, more preferably not more than 15 parts by mass, more preferably not more than 12 parts by mass from the viewpoint of obtaining an effect of improvement for increase in cost.

Specific kinds of the silane coupling agents (C-3) may be used alone, and two or more kinds thereof may be used in combination.

<Organoaluminum compound (D-3)>

The organoaluminum compound (D-3) is a complex comprising aluminum and an organic compound, and is one generating aluminum hydroxide by a hydrolysis reaction. Therefore, when such organoaluminum compound (D-3) is compounded, at least a part of the organoaluminum compound (D-3) is subject to hydrolysis during the kneading, and aluminum hydroxide is generated.

Example of such organoaluminum compound (D-3) includes an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively. Here, the aliphatic hydrocarbon groups are those having a branched or non-branched alkyl group, alkenyl group or alkynyl group as a skeleton and may have a hetero atom such as an oxygen atom, a nitrogen atom and the like. Preferable aliphatic hydrocarbon groups are those having 1 to 12 carbon atoms ($C_{1-12}$) (However, in the case of having an alkenyl group or an alkynyl group as a skeleton, it is necessary that the lower limit of the number of carbon atoms is at least two. Hereinafter the same.), more preferably $C_{1-10}$, more preferably $C_{1-8}$, more preferably $C_{2-6}$. Examples of aliphatic hydrocarbon group represented by $R^a$, $R^b$ or $R^c$ include an ethyl group ($C_2$), an isopropyl group ($C_3$), a sec-butyl group ($C_4$), 3-ethoxycarbonyl-2-propen-2-yl group ($C_6$) and the like.

Examples of the aluminum alcolate include aluminum ethylate, aluminum isopropylate, aluminum diisopropylate mono sec-butyrate, aluminum sec-butyrate, aluminum ethylaceoacetate diisopropylate, aluminum tris-(ethylacetoacetate) and the like.

A compounding amount of the organoaluminum compound (D-3) is preferably not less than 5 parts by mass, more preferably not less than 7 parts by mass, more preferably not less than 10 parts by mass based on 100 parts by mass of the rubber component (A-3) from the viewpoint of good wet grip performance and abrasion resistance. On the other hand, the compounding amount is preferably not more than 45 parts by mass, more preferably not more than 40 parts by mass, for the same reason as mentioned above.

Specific kinds of the organoaluminum compounds (D-3) may be used alone, and two kinds or more thereof may be used in combination.

Besides the above-mentioned components, other components commonly used in the tire industry, for example, softening agents, antioxidants, waxes, stearic acid, zinc oxide, vulcanizing agent such as sulfur, vulcanization accelerators and the like can be optionally compounded in the rubber composition according to one of the third embodiments.

By compounding a softening agent, enhancement of wet grip performance, dry grip performance and initial grip performance can be expected. The softening agent is not limited particularly, and example thereof includes oils. Examples of the oil include process oils such as a paraffin process oil, an aromatic process oil and a naphthenic process oil. When the oil is compounded, a compounding amount thereof is preferably not less than 20 parts by mass, more preferably not less than 25 parts by mass based on 100 parts by mass of the rubber component (A-3) from the viewpoint of obtaining a sufficient effect resulting from the addition thereof. On the other hand, the compounding amount thereof is preferably not more than 70 parts by mass, more preferably not more than 60 parts by mass from the viewpoint of maintaining abrasion resistance. It is noted that herein the content of oil includes an amount of oil included in an oil-extended rubber.

Specific kinds of the softening agents may be used alone, and two or more kinds thereof may be used in combination.

Examples of vulcanization accelerators include sulfeneamide-based, thiazole-based, thiuram-based and guanidine-based vulcanization accelerators. Examples of sulfeneamide-based vulcanization accelerators include N-cyclohexyl-2-benzothiazylsulfeneamide, N,N-dicyclohexyl-2-benzothiazylsulfeneamide, N-ter-butyl-2-benzothiazylsulfeneamide and the like. Examples of thiazole-based vulcanization accelerators include 2-mercaptobenzothiazole, cyclohexylamine salt of 2-mercaptobenzothiazole, di-2-benzothiazoryldisulfide and the like. Examples of thiuram-based vulcanization accelerators include tetramethylthiuram monosulfide, tetrabenzylthiuram disulfide, tetrakis(2-ethylhexyl)thiuram disulfide and the like. Examples of guanidine-based vulcanization accelerators include diphenylguanidine.

When compounding the vulcanization accelerator, a content thereof is preferably not less than 1 part by mass, more preferably not less than 2 parts by mass based on 100 parts by mass of the rubber component (A-3) from the

viewpoint of achieving sufficient vulcanization. On the other hand, the content is preferably not more than 20 parts by mass, more preferably not more than 15 parts by mass from the viewpoint of securing an enough scorch time.

Specific kinds of the vulcanization accelerators may be used alone, and two or more kinds thereof may be used in combination.

The rubber composition according to one of the third embodiments can be prepared by a usual method. Namely the rubber composition can be prepared by a method of kneading the above-mentioned components with a Banbury mixer, a kneader or an open roll and then conducting vulcanization as required, or by other method.

<Application>

The rubber composition according to one of the third embodiments can be used for various applications, making the best use of characteristic thereof, and among them, can be used as rubber compositions for a tire. When using the rubber composition according to one of the third embodiments is used for a rubber composition for a tire, it can be used for various members constituting the tire, for example, for a tread including a base tread, an inner liner, a side wall and the like, and from characteristics thereof, is preferably used for a tread (a tire tread).

When using the rubber composition according to one of the third embodiments is used for a tread, the tire can be produced from the rubber composition according to one of the third embodiments by a usual method. Namely, an un-vulcanized tire is formed by kneading a mixture obtained by appropriately compounding the above-mentioned components as required, extrusion-processing a kneaded product to a shape of each tire member at an unvulcanized stage, and forming by a usual forming method on a tire building machine. A tire can be produced by subjecting this unvulcanized tire to heating and compressing in a vulcanizer, and by putting air in the tire, a pneumatic tire can be produced.

While not intending to be bound in any way by theory, it can be considered that an effect of using an organoaluminum compound (D-3) instead of aluminum hydroxide is exhibited as follows. Namely, while aluminum hydroxide contributes to improvement of wet grip performance, it cannot help but lower abrasion resistance since its particle size is relatively large and it does not have bonding point with the rubber. Improvement of abrasion resistance can be expected to a certain extent by making a particle size smaller. On the other hand, there is a problem such that room for improvement of wet grip performance decreases. However, an organoaluminum compound (D-3) is a compound generating aluminum hydroxide by hydrolysis, and a mode of hydrolysis thereof is similar to that of the silane coupling agent (C-3). Therefore, moisture on a surface of the filler is consumed highly efficiently in cooperation with the silane coupling agent (C-3), and a shearing strength becomes large at the time of kneading. As a result, it is considered that kneading is conducted sufficiently and dispersibility of the filler is improved. Further, it is considered that in the same manner as a reaction of the silane coupling agent (C-3), the organoaluminum compound (D-3) reacts with the rubber to enhance an effect of reinforcing the rubber, thereby improving abrasion resistance.

Improvement of dispersibility of the filler by compounding the organoaluminum compound (D-3) as mentioned above also contributes to inhibit lowering of processability, even more in particular, in the case of using silica having a small particle size, so-called fine particle silica. Therefore, by combination use of the organoaluminum compound with silica, in particular fine particle silica, it becomes possible to sufficiently derive a merit of compounding silica, namely, enhancement of fuel efficiency and improvement of abrasion resistance resulting from improved reinforceability.

<Fourth embodiment>

The fourth embodiment relates to:

[1] a method of preparing a rubber composition comprising a starting chemical comprising a rubber component (A-4) comprising a styrene-butadiene rubber, a filler comprising silica (B1-4), a silane coupling agent (C-4) and an organoaluminum compound (D-4), wherein a kneading step comprises at least two stages comprising a former stage (X1-1) for kneading the starting chemical containing no vulcanizing chemical and a latter stage (X1-2) for adding the vulcanizing chemical to a kneaded product obtained in the former stage, and kneading a mixture, and wherein in the former stage (X1-1), a discharge temperature of the kneaded product is a temperature within a predetermined temperature range and the kneaded product is held at the discharge temperature for a predetermined period of time in order to remove alcohol generated during the kneading,

[2] the method of preparing a rubber composition of the above [1], wherein the filler further comprises carbon black (B2-4),

[3] the method of preparing a rubber composition of the above [2], wherein a compounding amount of the silica (B1-4) is 50 to 150 parts by mass, preferably 60 to 120 parts by mass, more preferably 60 to 110 parts by mass, a compounding amount of the carbon black (B2-4) is 5 to 50 parts by mass, preferably 5 to 35 parts by mass, more preferably 5 to 20 parts by mass, further preferably 8 to 20 parts by mass, and a compounding amount of the organoaluminum compound (D-4) is 5 to 45 parts by mass, preferably 5 to 40 parts by mass, more preferably 7 to

40 parts by mass, further preferably 10 to 40 parts by mass based on 100 parts by mass of the rubber component (A-4), and a compounding amount of silane coupling agent (C-4) is 1 to 20 parts by mass, preferably 1.5 to 20 parts by mass, more preferably 2 to 20 parts by mass, further preferably 5 to 20 parts by mass, further preferably 5 to 15 parts by mass, further preferably 7 to 12 parts by mass based on 100 parts by mass of the silica (B1-4),
[4] the method of preparing a rubber composition of any of the above [1] to [3], wherein the organoaluminum compound (D-4) is an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively,
[5] the method of preparing a rubber composition of any of the above [1] to [4], wherein the temperature within a predetermined temperature range is 150° to 180°C, preferably 150° to 175°C, more preferably 155° to 175°C, and the predetermined period of time is 10 to 120 seconds, preferably 15 to 100 seconds, and
[6] a method of producing a tire comprising:

a step of preparing a rubber composition by the method of preparing a rubber composition of any of the above [1] to [5],
a step of extruding the rubber composition in a form of a tire tread,
a step of molding the tire tread with other tire members on a tire molding machine to form an unvulcanized tire, and
a step of vulcanizing the unvulcanized tire.

According to the fourth embodiment, a method of preparing a rubber composition having excellent characteristics, in particular a rubber composition for a tire having improved processability, wet grip performance and abrasion resistance and improved fuel efficiency, a rubber composition prepared by the preparation method, and a tire tread and a tire produced using the rubber composition can be provided.
Modes for performing the fourth embodiment will be explained below.

<Rubber component (A-4)>

The rubber component (A-4) comprises a styrene-butadiene rubber (SBR). SBR is not limited particularly, and for example, an emulsion-polymerized styrene-butadiene (E-SBR), a solution-polymerized styrene-butadiene (S-SBR), a modified styrene-butadiene thereof (modified S-SBR, modified E-SBR) and the like can be used. Examples of the modified SBR include an end-modified and/or main-chain-modified SBR, a modified SBR coupled with a tin or silicon compound or the like (such as a condensate, one having a branch structure, etc.).
A vinyl content of the SBR is preferably not less than 20 mole %, more preferably not less than 25 mole %, from the viewpoint of sufficient wet grip performance and dry grip performance. On the other hand, from the viewpoint of good abrasion resistance, the vinyl content is preferably not more than 80 mole %, more preferably not more than 70 mole %. It is noted that the vinyl content of the SBR is a value determined by an infrared absorption spectrum analysis method.
A styrene content of the SBR is preferably not less than 20% by mass, more preferably not less than 25% by mass, from the viewpoint of sufficient wet grip performance and dry grip performance. On the other hand, from the viewpoint of good abrasion resistance and temperature dependency (a state of a performance change relative to a temperature change being inhibited), the styrene content is preferably not more than 60% by mass, more preferably not more than 50% by mass, further preferably not more than 45% by mass.
A glass transition temperature (Tg) of the SBR is preferably not lower than -60°C, more preferably not lower than -50°C, from the viewpoint of sufficient wet grip performance and dry grip performance. The Tg is preferably not higher than 0°C, more preferably not higher than -10°C from the viewpoint of good initial grip performance and abrasion resistance.
An SBR content is not less than 60% by mass, preferably not less than 70% by mass, more preferably not less than 80% by mass, more preferably not less than 90% by mass, most preferably 100% by mass based on 100% by mass of the rubber component (A-4), from the viewpoint of sufficient heat resistance and abrasion resistance.
Rubber components other than the SBR may be compounded as the rubber component (A-4). Examples of such other rubber component include diene rubbers such as a natural rubber (NR), a butadiene rubber (BR), an isoprene rubber (IR), a styrene-isoprene-butadiene rubber (SIBR), a chloroprene rubber (CR) and an acrylonitrile-butadiene rubber (NBR), non-diene rubbers such as an ethylene-propylene-diene rubber (EPDM), a butyl rubber (IIR) and a halogenated butyl rubber (X-IIR), and the like. A specific kind of these other rubber components may be used alone, or two or more kinds thereof may be used in combination.

<Filler>

The filler comprises silica (B1-4). This is because when the filler comprises silica (B1-4), improvement of wet grip performance and fuel efficiency can be expected. For example, silica prepared by a dry method (anhydrous silica), silica prepared by a wet method (hydrous silica) and the like can be used as the silica (B1-4). In particular, for the reason that the number of silanol groups is large, silica prepared by a wet method is preferable.

A nitrogen adsorption BET specific surface area ($N_2SA$) of the silica (B1-4) is preferably not less than 50 $m^2/g$, more preferably not less than 70 $m^2/g$, more preferably not less than 100 $m^2/g$, more preferably not less than 120 $m^2/g$, further preferably not less than 150 $m^2/g$, from the viewpoint of improvement of fuel efficiency and abrasion resistance resulting from improvement of reinforcing property. On the other hand, from the viewpoint of securing good dispersibility and inhibiting agglomeration, the $N_2SA$ of the silica (B1-4) is preferably not more than 500 $m^2/g$, preferably not more than 400 $m^2/g$, more preferably not more than 300 $m^2/g$.

The $N_2SA$ of the silica (B1-4) is a value measured by a BET method in accordance with ASTM D3037-81.

A specific kind of the silica (B1-4) may be used alone, or two or more kinds thereof may be used in combination.

Any of fillers which are used usually in this field can be used suitably as a filler other than the silica (B1-4) unless contradictory to the purpose of the fourth embodiment, and examples of such a filler include carbon black (B2-4). By compounding the carbon black (B2-4), improvement of abrasion resistance can be expected. The filler comprising the silica (B1-4) and the carbon black (B2-4) is preferable.

For example, there are carbon black produced by an oil furnace method and the like as the carbon black (B2-4), and two or more kinds of carbon black having different colloidal properties may be used in combination. Examples thereof include those of GPF, HAF, ISAF, SAF grades, and the like.

A nitrogen adsorption specific surface area ($N_2SA$) of the carbon black (B2-4) is preferably 70 to 250 $m^2/g$, more preferably 110 to 200 $m^2/g$, for the reason that good wet grip performance, dry grip performance and abrasion resistance can be obtained. A dibutyl phthalate oil absorption (DBP) of the carbon black (B2-4) is preferably 50 to 250 ml/100 g for the same reason. It is noted that the $N_2SA$ of the carbon black (B2-4) is a value determined in accordance with JIS K6217-2: 2001, and the DPB is a value determined in accordance with JIS K6217-4: 2001.

A specific kind of the carbon black (B2-4) may be used alone, or two or more kinds thereof may be used in combination.

A compounding amount of the silica (B1-4) is not less than 50 parts by mass, preferably not less than 60 parts by mass based on 100 parts by mass of the rubber component (A-4) from the viewpoint of sufficient wet grip performance. On the other hand, the compounding amount is not more than 150 parts by mass, preferably not more than 120 parts by mass, more preferably not more than 110 parts by mass from the viewpoint of its good dispersion, and further good abrasion resistance.

When compounding the carbon black (B2-4), a compounding amount thereof is preferably not less than 5 parts by mass, more preferably not less than 8 parts by mass based on 100 parts by mass of the rubber component (A-4) from the viewpoint of good wet grip performance, dry grip performance and abrasion resistance. On the other hand, the compounding amount is preferably not more than 50 parts by mass, more preferably not more than 35 parts by mass, further preferably not more than 20 parts by mass from the viewpoint of maintaining good wet grip performance.

A compounding amount of the filler is preferably not less than 50 parts by mass, preferably not less than 55 parts by mass, more preferably not less than 65 parts by mass based on 100 parts by mass of the rubber component (A-4) from the viewpoint of good wet grip performance, dry grip performance and abrasion resistance. On the other hand, the compounding amount is not more than 170 parts by mass, more preferably not more than 150 parts by mass, further preferably not more than 120 parts by mass from the viewpoint of good wet grip performance and abrasion resistance. A proportion of the silica (B1-4) in the whole filler is preferably not less than 70% by mass, more preferably not less than 75% by mass, more preferably not less than 80% by mass, from the viewpoint of exhibiting an effect of the fourth embodiment satisfactorily. On the other hand, the proportion is not more than 95% by mass, more preferably not more than 90% by mass from the same reason as mentioned above.

When the filler consists of the silica (B1-4) and the carbon black (B2-4), the compounding amount of the carbon black (B2-4) may be determined from the above-mentioned "total amount of the filler" and the "compounding amount of the silica (B1-4)" or the compounding amount of the silica (B1-4) may be determined from the above-mentioned "total amount of the filler" and the "compounding amount of the carbon black (B2-4).

<Silane coupling agent (C-4)>

The silane coupling agent (C-4) is not limited particularly, and any of silane coupling agents which are usually used in this field can be used properly. Examples of such a silane coupling agent (C-4) are bis(3-triethoxysilylpropyl)polysulfide, bis(2-triethoxysilylethyl)polysulfide, bis(3-trimethoxysilylpropyl)polysulfide, bis(2-trimethoxysilylethyl)polysulfide, bis(4-triethoxysilylbuyl)polysulfide, bis(4-trimethoxysilylbutyl)polysulfide, and the like. Among these,

bis(3-triethoxysilylpropyl)polysulfide, and bis(2-triethoxysilylethyl)polysulfide are preferable, and bis(3-triethoxysilylpropyl)tetrasulfide, and bis(2-triethoxysilylethyl)tetrasulfide are more preferable.

A compounding amount of the silane coupling agent (C-4) is preferably not less than 1 part by mass, more preferably not less than 1.5 parts by mass, more preferably not less than 2 parts by mass, preferably not less than 5 parts by mass, more preferably not less than 7 parts by mass based on 100 parts by mass of the silica (B1-4) from the viewpoint of good abrasion resistance. On the other hand, the compounding amount is preferably not more than 20 parts by mass, more preferably not more than 15 parts by mass, more preferably not more than 12 parts by mass from the viewpoint of obtaining an effect of improvement for increase in cost.

Specific kinds of the silane coupling agents (C-4) may be used alone, and two or more kinds thereof may be used in combination.

<Organoaluminum compound (D-4)>

The organoaluminum compound (D-4) is a complex comprising aluminum and an organic compound, and is one generating aluminum hydroxide by a hydrolysis reaction. Therefore, when such organoaluminum compound (D-4) is compounded, at least a part of the organoaluminum compound (D-4) is subject to hydrolysis during the kneading, and aluminum hydroxide is generated.

Example of such organoaluminum compound (D-4) includes an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively. Here, the aliphatic hydrocarbon groups are those having a branched or non-branched alkyl group, alkenyl group or alkynyl group as a skeleton and may have a hetero atom such as an oxygen atom, a nitrogen atom and the like. Preferable aliphatic hydrocarbon groups are those having 1 to 12 carbon atoms ($C_{1-12}$) (However, in the case of having an alkenyl group or an alkynyl group as a skeleton, it is necessary that the lower limit of the number of carbon atoms is at least two. Hereinafter the same.), more preferably $C_{1-10}$, more preferably $C_{1-8}$, more preferably $C_{2-6}$. Examples of aliphatic hydrocarbon group represented by $R^a$, $R^b$ or $R^c$ include an ethyl group ($C_2$), an isopropyl group ($C_3$), a sec-butyl group ($C_4$), 3-ethoxycarbonyl-2-propen-2-yl group ($C_6$) and the like.

Examples of the aluminum alcolate include aluminum ethylate, aluminum isopropylate, aluminum diisopropylate mono sec-butyrate, aluminum sec-butyrate, aluminum ethylaceoacetate diisopropylate, aluminum tris-(ethylacetoacetate) and the like.

A compounding amount of the organoaluminum compound (D-4) is preferably not less than 5 parts by mass, more preferably not less than 7 parts by mass, more preferably not less than 10 parts by mass based on 100 parts by mass of the rubber component (A-4) from the viewpoint of good wet grip performance and abrasion resistance. On the other hand, the compounding amount is preferably not more than 45 parts by mass, more preferably not more than 40 parts by mass, for the same reason as mentioned above.

Specific kinds of the organoaluminum compounds (D-4) may be used alone, and two kinds or more thereof may be used in combination.

Besides the above-mentioned components, other components commonly used in the tire industry, for example, softening agents, antioxidants, waxes, stearic acid, zinc oxide, vulcanizing agent such as sulfur, vulcanization accelerators and the like can be optionally compounded in the rubber composition according to one of the fourth embodiments.

By compounding a softening agent, enhancement of wet grip performance, dry grip performance and initial grip performance can be expected. The softening agent is not limited particularly, and example thereof includes oils. Examples of the oil include process oils such as a paraffin process oil, an aromatic process oil and a naphthenic process oil. When the oil is compounded, a compounding amount thereof is preferably not less than 20 parts by mass, more preferably not less than 25 parts by mass based on 100 parts by mass of the rubber component (A-4) from the viewpoint of obtaining a sufficient effect resulting from the addition thereof. On the other hand, the compounding amount thereof is preferably not more than 70 parts by mass, more preferably not more than 60 parts by mass from the viewpoint of maintaining abrasion resistance. It is noted that herein the content of oil includes an amount of oil included in an oil-extended rubber.

Specific kinds of the softening agents may be used alone, and two or more kinds thereof may be used in combination.

Examples of vulcanization accelerators include sulfeneamide-based, thiazole-based, thiuram-based and guanidine-based vulcanization accelerators. Examples of sulfeneamide-based vulcanization accelerators include N-cyclohexyl-2-benzothiazylsulfeneamide, N,N-dicyclohexyl-2-benzothiazylsulfeneamide, N-ter-butyl-2-benzothiazylsulfeneamide and the like. Examples of thiazole-based vulcanization accelerators include 2-mercaptobenzothiazole, cyclohexylamine salt of 2-mercaptobenzothiazole, di-2-benzothiazoryldisulfide and the like. Examples of thiuram-based vulcanization accelerators include tetramethylthiuram monosulfide, tetrabenzylthiuram disulfide, tetrakis(2-ethylhexyl)thiuram disulfide and the like. Examples of guanidine-based vulcanization accelerators include diphenylguanidine.

When compounding the vulcanization accelerator, a content thereof is preferably not less than 1 part by mass, more preferably not less than 2 parts by mass based on 100 parts by mass of the rubber component (A-4) from the viewpoint of achieving sufficient vulcanization. On the other hand, the content is preferably not more than 20 parts by mass, more preferably not more than 15 parts by mass from the viewpoint of securing an enough scorch time.

Specific kinds of the vulcanization accelerators may be used alone, and two or more kinds thereof may be used in combination.

<Method of preparing rubber composition>

The method of preparing the rubber composition according to one of the fourth embodiments comprises a kneading step comprising at least two stages comprising a former stage (X1-1) for kneading a starting chemical containing no vulcanization chemical and a latter stage (X2-1) for adding the vulcanization chemical to a kneaded product obtained in the former stage (X1-1) and kneading a mixture, and the former stage (X1-1) is characterized in that a discharge temperature of the kneaded product is a temperature within a predetermined temperature range and the kneaded product is held at the discharge temperature for a predetermined period of time in order to remove alcohol generated during the kneading. Except this characteristic, the rubber composition according to one of the fourth embodiments can be prepared by a usual method. Namely the rubber composition can be prepared by a method of kneading the above-mentioned components with a Banbury mixer, a kneader or an open roll and then conducting vulcanization as required, or by other method.

In one of the fourth embodiments, the kneading step comprises at least two stages comprising the former stage (X1-1) for kneading a starting chemical containing no vulcanization chemical and the latter stage (X2-1) (final stage) for adding the vulcanization chemical to a kneaded product obtained in the former stage (X1-1) and kneading a mixture. Further, the former stage (X1-1) can be further divided into a plurality of stages according to necessity. Here, the vulcanization chemical is a chemical for so-called vulcanization (namely, crosslinking polymer chains of a rubber component as a plastic material), which is concretely a vulcanizing agent, a vulcanization accelerator, a vulcanization aid or the like.

(Former stage (X1-1) of kneading step)

The former stage (X1-1) of the kneading step is more specifically a stage for mixing the rubber component (A-4), the fillers (B1-4, B2-4), the silane coupling agent (C-4) and the organoaluminum compound (D-4) and kneading a mixture. In the former stage (X1-1), a softening agent, stearic acid and the like may be compounded. A stage for preliminary kneading only the rubber component (A-4) is not included in the former stage (X1-1). In one of the fourth embodiments, when discharging the kneaded product of the former stage (X1-1) of the kneading step, the purpose of setting a discharge temperature of the kneaded product to be within a predetermined temperature range and holding the kneaded product at the discharge temperature for a predetermined period of time is to remove alcohol generated during the kneading due to hydrolysis of the organoaluminum compound and the like. If removal of alcohol is insufficient, a large amount of steam is generated from alcohol during the kneading and foaming occurs from the inside of the rubber composition. In order to prevent this and derive an effect of compounding the organoaluminum compound (D-4) described hereinafter, holding the kneaded product at the temperature within the predetermined temperature range for the predetermined period of time is effective.

Therefore, "the temperature within the predetermined temperature range for the predetermined period of time" for holding the kneaded product when discharging the kneaded product at the former stage (X1-1) of the kneading step may be "a holding temperature and a holding time enough for removing alcohol generated during the kneading". Such a holding temperature and a holding time may vary with kind of the organoaluminum compound (D-4), kinds of other staring materials to be used and the like, and can be adequately set by a person skilled in the art for the above-mentioned purpose.

The above-mentioned holding temperature can be set to be within a predetermined range by adjusting the number of rotations of a mixer, a depressing pressure of a ram, a temperature of cooling water circulated in the mixer and the like, and a person skilled in the art can set the temperature adequately.

The discharge temperature of the kneaded product at the former stage (X1-1) of the kneading step is usually preferably not lower than 150°C, more preferably not lower than 155°C. When the discharge temperature is lower than 150°C, there is a tendency that a reaction of the silica with the silane coupling agent becomes insufficient, and abrasion resistance and fuel efficiency are rather deteriorated than improved. On the other hand, the discharge temperature is usually preferably not higher than 180°C, more preferably not higher than 175°C. When the discharge temperature is

higher than 180°C, there is a tendency that gelation inside the rubber is accelerated excessively and processability is lowered.

The holding time when discharging the kneaded product at the former stage (X1-1) of the kneading step is usually preferably not less than 10 seconds, more preferably not less than 15 seconds from the viewpoint of exhibiting an effect of the fourth embodiment. On the other hand, the holding time is usually preferably not more than 120 seconds, more preferably not more than 100 seconds. Even if the holding time is extended to more than 120 seconds, there is a tendency that improvement of an effect resulting therefrom cannot be expected, and instead, productivity is lowered.

The former stage (X1-1) of the kneading step can be divided into a plurality of stages as desired, for example, in the case where kneading of the above-mentioned chemicals (A) to (D) is separated into plural times to conduct the kneading stepwise. In any case, in the former stage (X1-1), the kneaded product is held at the temperature within the predetermined temperature range for a predetermined period of time when discharging the kneaded product for the purpose of removing alcohol generated from the compounded organoaluminum compound (D-4) and for achieving the removal.

Besides the above-mentioned matters, the former stage (X1-1) of the kneading step can be performed in accordance with general method prevailing in a rubber industry.

(Latter stage (X2-1) of kneading step)

The latter stage (X2-1) of the kneading step is a final stage of the kneading step for mixing the vulcanization chemical and other remaining chemicals to a kneaded product obtained in the former stage and kneading a mixture. The latter stage (X2-1) of the kneading step can be performed in accordance with general method prevailing in a rubber industry.

<Application>

The rubber composition according to one of the fourth embodiments can be used for various applications, making the best use of characteristics thereof, and among them, can be used as rubber compositions for a tire. When the rubber composition according to one of the fourth embodiments is used for a rubber composition for a tire, it can be used for various members constituting the tire, for example, for a tread including a base tread, an inner liner, a side wall and the like, and from characteristics thereof, is preferably used for a tread (a tire tread).

When the rubber composition according to one of the fourth embodiments is used for a tire, the tire can be produced from the rubber composition according to one of the fourth embodiments by a usual method. Namely, an unvulcanized tire is formed by kneading a mixture obtained by appropriately compounding the above-mentioned components as required, extrusion-processing a kneaded product to a shape of each tire member at an unvulcanized stage, and forming by a usual forming method on a tire building machine. A tire can be produced by subjecting this unvulcanized tire to heating and compressing in a vulcanizer, and by putting air in the tire, a pneumatic tire can be produced.

While not intending to be bound in any way by theory, it can be considered that an effect of using an organoaluminum compound (D-4) instead of aluminum hydroxide is exhibited as follows. Namely, while aluminum hydroxide contributes to improvement of wet grip performance, it cannot help but lower abrasion resistance since its particle size is relatively large and it does not have bonding point with the rubber. Improvement of abrasion resistance can be expected to a certain extent by making a particle size smaller. On the other hand, there is a problem such that room for improvement of wet grip performance decreases. However, an organoaluminum compound (D-4) is a compound generating aluminum hydroxide by hydrolysis, and a mode of hydrolysis thereof is similar to that of the silane coupling agent (C-4). Therefore, moisture on a surface of the filler is consumed highly efficiently in cooperation with the silane coupling agent (C-4), and a shearing strength becomes large at the time of kneading. As a result, it is considered that kneading is conducted sufficiently and dispersibility of the filler is improved. Further, it is considered that in the same manner as a reaction of the silane coupling agent (C-4), the organoaluminum compound (D-4) reacts with the rubber to enhance an effect of reinforcing the rubber, thereby improving abrasion resistance.

<Fifth embodiment>

The fifth embodiment relates to:

[1] a method of preparing a rubber composition comprising a starting chemical comprising a rubber component (A-5) comprising a styrene-butadiene rubber, a filler comprising silica (B1-5), a silane coupling agent (C-5) and an organoaluminum compound (D-5), wherein a kneading step comprises at least two stages comprising a former stage (X1-2) for kneading the starting chemical containing no vulcanizing agent and a latter stage (X2-2) for adding the vulcanizing agent to a kneaded product obtained in the former stage (X1-2), and kneading a mixture, and

wherein the former stage (X1-2) is a stage, where a basic vulcanization accelerator (E-5) is added to the starting chemical comprising the rubber component, the filler, the silane coupling agent and the organoaluminum compound, and a mixture is kneaded,
[2] the method of preparing a rubber composition of the above [1], wherein the former stage (X1-2) comprises at least two stages comprising a first stage and a final stage,
wherein the first stage is a stage for kneading a starting chemical comprising a rubber component (A-5), a part or the whole of silica (B1-5) and a part or the whole of silane coupling agent (C-5),
wherein the final stage is a stage for compounding a starting chemical comprising a residue of at least either of silica (B1-5) and silane coupling agent (C-5) to a kneaded product obtained from the first stage through the stage just before the final stage and then kneading a mixture, and
wherein the basic vulcanization accelerator (E-5) is at least compounded in any stage from the first stage to the final stage,
[3] the method of preparing a rubber composition of the above [2], wherein the former stage (X1-2) consists of the first stage and the final stage,
[4] the method of preparing a rubber composition of any of the above [1] to [3], wherein the basic vulcanization accelerator (E-5) is at least one selected from the group consisting of a guanidine-based vulcanization accelerator, an aldehyde ammonia-based vulcanization accelerator, an aldehyde amine-based vulcanization accelerator and a thiourea-based vulcanization accelerator,
[5] the method of preparing a rubber composition of any of the above [1] to [4], wherein the filler further comprises carbon black (B2-5),
[6] the method of preparing a rubber composition of the above [5], wherein a compounding amount of the silica (B1-5) is 50 to 150 parts by mass, preferably 60 to 120 parts by mass, more preferably 60 to 110 parts by mass, a compounding amount of the carbon black (B2-5) is 5 to 50 parts by mass, preferably 5 to 35 parts by mass, more preferably 5 to 20 parts by mass, further preferably 8 to 20 parts by mass, and a compounding amount of the organoaluminum compound (D-5) is 5 to 45 parts by mass, preferably 5 to 40 parts by mass, more preferably 7 to 40 parts by mass, further preferably 10 to 40 parts by mass based on 100 parts by mass of the rubber component (A-5), and a compounding amount of the silane coupling agent (C-5) is 1 to 20 parts by mass, preferably 1.5 to 20 parts by mass, more preferably 2 to 20 parts by mass, further preferably 5 to 20 parts by mass, further preferably 5 to 15 parts by mass, further preferably 7 to 12 parts by mass based on 100 parts by mass of the silica (B1-5),
[7] the method of preparing a rubber composition of any of the above [1] to [6], wherein the organoaluminum compound (D-5) is an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively, and
[8] a method of producing a tire comprising:

- a step of preparing a rubber composition by the method of preparing a rubber composition of any of the above [1] to [7],
- a step of extruding the rubber composition in a form of a tire tread,
- a step of molding the tire tread with other tire members on a tire molding machine to form an unvulcanized tire, and
- a step of vulcanizing the unvulcanized tire.

According to the fifth embodiment, a method of preparing a rubber composition having excellent characteristics, in particular a rubber composition for a tire having, in particular, improved wet grip performance and abrasion resistance and improved fuel efficiency, a rubber composition prepared by the preparation method, and a tire tread and a tire produced using the rubber composition can be provided.
Modes for performing the fifth embodiment will be explained below.

<Rubber component (A-5)>

The rubber component (A-5) comprises styrene-butadiene rubber (SBR). SBR is not limited particularly, and for example, an emulsion-polymerized styrene-butadiene (E-SBR), a solution-polymerized styrene-butadiene (S-SBR), a modified styrene-butadiene thereof (modified S-SBR, modified E-SBR) and the like can be used. Examples of the modified SBR include an end-modified and/or main-chain-modified SBR, a modified SBR coupled with a tin or silicon compound or the like (such as a condensate, one having a branch structure, etc.).
A vinyl content of the SBR is preferably not less than 20 mole %, more preferably not less than 25 mole %, from the viewpoint of sufficient wet grip performance and dry grip performance. On the other hand, from the viewpoint

of good abrasion resistance, the vinyl content is preferably not more than 80 mole %, more preferably not more than 70 mole %. It is noted that the vinyl content of the SBR is a value determined by an infrared absorption spectrum analysis method.

A styrene content of the SBR is preferably not less than 20% by mass, more preferably not less than 25% by mass, from the viewpoint of sufficient wet grip performance and dry grip performance. On the other hand, from the viewpoint of good abrasion resistance and temperature dependency (a state of a performance change relative to a temperature change being inhibited), the styrene content is preferably not more than 60% by mass, more preferably not more than 50% by mass, further preferably not more than 45% by mass.

A glass transition temperature (Tg) of the SBR is preferably not lower than -60°C, more preferably not lower than -50°C, from the viewpoint of sufficient wet grip performance and dry grip performance. The Tg is preferably not higher than 0°C, more preferably not higher than -10°C from the viewpoint of good initial grip performance and abrasion resistance.

An SBR content is not less than 60% by mass, preferably not less than 70% by mass, more preferably not less than 80% by mass, more preferably not less than 90% by mass, most preferably 100% by mass based on 100% by mass of the rubber component (A-5), from the viewpoint of sufficient heat resistance and abrasion resistance.

Rubber components other than the SBR may be compounded as the rubber component (A-5). Examples of such other rubber component include diene rubbers such as a natural rubber (NR), a butadiene rubber (BR), an isoprene rubber (IR), a styrene-isoprene-butadiene rubber (SIBR), a chloroprene rubber (CR) and an acrylonitrile-butadiene rubber (NBR), non-diene rubbers such as an ethylene-propylene-diene rubber (EPDM), a butyl rubber (IIR) and a halogenated butyl rubber (X-IIR), and the like. A specific kind of these other rubber components may be used alone, or two or more kinds thereof may be used in combination.

<Filler>

The filler comprises silica (B1-5). This is because when the filler comprises silica (B1-5), improvement of wet grip performance and fuel efficiency can be expected. For example, silica prepared by a dry method (anhydrous silica), silica prepared by a wet method (hydrous silica) and the like can be used as the silica (B1-5). In particular, for the reason that the number of silanol groups is large, silica prepared by a wet method is preferable.

A nitrogen adsorption BET specific surface area ($N_2SA$) of the silica (B1-5) is preferably not less than 50 $m^2/g$, more preferably not less than 70 $m^2/g$, more preferably not less than 100 $m^2/g$, more preferably not less than 120 $m^2/g$, further preferably not less than 150 $m^2/g$, from the viewpoint of improvement of fuel efficiency and abrasion resistance resulting from improvement of reinforcing property. On the other hand, from the viewpoint of securing good dispersibility and inhibiting agglomeration, the $N_2SA$ of the silica (B1-5) is preferably not more than 500 $m^2/g$, preferably not more than 400 $m^2/g$, more preferably not more than 300 $m^2/g$.

The $N_2SA$ of the silica (B1-5) is a value measured in accordance with ASTM D3037-81.

A specific kind of the silica (B1-5) may be used alone, or two or more kinds thereof may be used in combination.

Any of fillers which are used usually in this field can be used suitably as a filler other than the silica (B1-5) unless contradictory to the purpose of the fifth embodiment, and examples of such a filler include carbon black (B2-5). By compounding the carbon black (B2-5), improvement of abrasion resistance can be expected. The filler comprising the silica (B1-5) and the carbon black (B2-5) is preferable.

For example, there are carbon black produced by an oil furnace method and the like as the carbon black (B2-5), and two or more kinds of carbon black having different colloidal properties may be used in combination. Examples thereof include those of GPF, HAF, ISAF, SAF grades, and the like.

A nitrogen adsorption specific surface area ($N_2SA$) of the carbon black (B2-5) is preferably 70 to 250 $m^2/g$, more preferably 110 to 200 $m^2/g$, for the reason that good wet grip performance, dry grip performance and abrasion resistance can be obtained. A dibutyl phthalate oil absorption (DBP) of the carbon black (B2-5) is preferably 50 to 250 ml/100 g for the same reason. It is noted that the $N_2SA$ of the carbon black (B2-5) is a value determined in accordance with JIS K6217-2: 2001, and the DPB is a value determined in accordance with JIS K6217-4: 2001.

A specific kind of the carbon black (B2-5) may be used alone, or two or more kinds thereof may be used in combination.

A compounding amount of the silica (B1-5) is not less than 50 parts by mass, preferably not less than 60 parts by mass based on 100 parts by mass of the rubber component (A-5) from the viewpoint of sufficient wet grip performance. On the other hand, the compounding amount is not more than 150 parts by mass, preferably not more than 120 parts by mass, more preferably not more than 110 parts by mass from the viewpoint of its good dispersion, and further good abrasion resistance.

When compounding the carbon black (B2-5), a compounding amount thereof is preferably not less than 5 parts by mass, more preferably not less than 8 parts by mass based on 100 parts by mass of the rubber component (A-5) from the viewpoint of good wet grip performance, dry grip performance and abrasion resistance. On the other hand, the

compounding amount is preferably not more than 50 parts by mass, more preferably not more than 35 parts by mass, further preferably not more than 20 parts by mass from the viewpoint of maintaining good wet grip performance.

A compounding amount of the filler is preferably not less than 50 parts by mass, preferably not less than 55 parts by mass, more preferably not less than 65 parts by mass based on 100 parts by mass of the rubber component (A-5) from the viewpoint of good wet grip performance, dry grip performance and abrasion resistance. On the other hand, the compounding amount is not more than 170 parts by mass, more preferably not more than 150 parts by mass, further preferably not more than 120 parts by mass from the viewpoint of good wet grip performance and abrasion resistance. A proportion of the silica (B1-5) in the whole filler is preferably not less than 70% by mass, more preferably not less than 75% by mass, more preferably not less than 80% by mass, from the viewpoint of exhibiting an effect of the fifth embodiment satisfactorily. On the other hand, the proportion is not more than 95% by mass, more preferably not more than 90% by mass from the same reason as mentioned above.

When the filler consists of the silica (B1-5) and the carbon black (B2-5), the compounding amount of the carbon black (B2-5) may be determined from the above-mentioned "total amount of the filler" and the "compounding amount of the silica (B1-5)" or the compounding amount of the silica (B1-5) may be determined from the above-mentioned "total amount of the filler" and the "compounding amount of the carbon black (B2-5).

<Silane coupling agent (C-5)>

The silane coupling agent (C-5) is not limited particularly, and any of silane coupling agents which are usually used in this field can be used properly. Examples of such a silane coupling agent (C-5) are bis(3-triethoxysilylpropyl)polysulfide, bis(2-triethoxysilylethyl)polysulfide, bis(3-trimethoxysilylpropyl)polysulfide, bis(2-trimethoxysilylethyl)polysulfide, bis(4-triethoxysilylbuyl)polysulfide, bis(4-trimethoxysilylbutyl)polysulfide, and the like. Among these, bis(3-triethoxysilylpropyl)polysulfide, and bis(2-triethoxysilylethyl)polysulfide are preferable, and bis(3-triethoxysilylpropyl)tetrasulfide, and bis(2-triethoxysilylethyl)tetrasulfide are more preferable.

A compounding amount of the silane coupling agent (C-5) is preferably not less than 1 part by mass, more preferably not less than 1.5 parts by mass, more preferably not less than 2 parts by mass, preferably not less than 5 parts by mass, more preferably not less than 7 parts by mass based on 100 parts by mass of the silica (B1-5) from the viewpoint of good abrasion resistance. On the other hand, the compounding amount is preferably not more than 20 parts by mass, more preferably not more than 15 parts by mass, more preferably not more than 12 parts by mass from the viewpoint of obtaining an effect of improvement for increase in cost.

Specific kinds of the silane coupling agents (C-5) may be used alone, and two or more kinds thereof may be used in combination.

<Organoaluminum compound (D-5)>

The organoaluminum compound (D-5) is a complex comprising aluminum and an organic compound, and is one generating aluminum hydroxide by a hydrolysis reaction. Therefore, when such organoaluminum compound (D-5) is compounded, at least a part of the organoaluminum compound (D-5) is subject to hydrolysis during the kneading, and aluminum hydroxide is generated.

Example of such organoaluminum compound (D-5) includes an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively. Here, the aliphatic hydrocarbon groups are those having a branched or non-branched alkyl group, alkenyl group or alkynyl group as a skeleton and may have a hetero atom such as an oxygen atom, a nitrogen atom and the like. Preferable aliphatic hydrocarbon groups are those having 1 to 12 carbon atoms ($C_{1-12}$) (However, in the case of having an alkenyl group or an alkynyl group as a skeleton, it is necessary that the lower limit of the number of carbon atoms is at least two. Hereinafter the same.), more preferably $C_{1-10}$, more preferably $C_{1-8}$, more preferably $C_{2-6}$. Examples of aliphatic hydrocarbon group represented by $R^a$, $R^b$ or $R^c$ include an ethyl group ($C_2$), an isopropyl group ($C_3$), a sec-butyl group ($C_4$), 3-ethoxycarbonyl-2-propen-2-yl group ($C_6$) and the like.

Examples of the aluminum alcolate include aluminum ethylate, aluminum isopropylate, aluminum diisopropylate mono sec-butyrate, aluminum sec-butyrate, aluminum ethylaceoacetate diisopropylate, aluminum tris-(ethylacetoacetate) and the like.

A compounding amount of the organoaluminum compound (D-5) is preferably not less than 5 parts by mass, more preferably not less than 7 parts by mass, more preferably not less than 10 parts by mass based on 100 parts by mass of the rubber component (A-5) from the viewpoint of good wet grip performance and abrasion resistance. On the

other hand, the compounding amount is preferably not more than 45 parts by mass, more preferably not more than 40 parts by mass, for the same reason as mentioned above.

Specific kinds of the organoaluminum compounds (D-5) may be used alone, and two kinds or more thereof may be used in combination.

<Basic vulcanization accelerator (E-5)>

The vulcanization accelerator is a chemical usually added together with the vulcanizing agent in the latter stage (X2-2) of the kneading step. However, one of the fifth embodiment is featured by compounding a specific vulcanization accelerator in the former stage (X1-2) of the kneading step. By compounding such a specific vulcanization accelerator in the former stage (X1-2) of the kneading step, it can be expected that a kneading step system is made basic and a polycondensation reaction of the silane coupling agent is accelerated.

In one of the fifth embodiment, examples of the specific vulcanization accelerator used in the former stage (X1-2) of the kneading step include a guanidine-based vulcanization accelerator, an aldehyde ammonia-based vulcanization accelerator, an aldehyde amine-based vulcanization accelerator and a thiourea-based vulcanization accelerator. Herein, these vulcanization accelerators are referred to as "basic vulcanization accelerator (E-5)" for distinguishing from other vulcanization accelerators. Among these basic vulcanization accelerators (E-5), the guanidine-based vulcanization accelerator is preferable for the reason that there is a vulcanization accelerating effect.

Examples of the guanidine-based vulcanization accelerator include 1,3-diphenylguanidine, 1,3-di-o-tolylguanidine, 1-o-tolylbiguanide, di-o-tolylguanidine salt of dicatechol borate, 1,3-di-o-cumenylguanidine, 1,3-di-o-biphenylguanidine, 1,3-di-o-cumenyl-2-propionylguanidine and the like. Because of high reactivity, 1,3-diphenylguanidine, 1,3-di-o-tolylguanidine and 1-o-tolylbiguanide are preferable, and 1,3-diphenylguanidine is particularly preferable since its reactivity is higher.

Examples of the aldehyde ammonia-based vulcanization accelerator include hexamethylenetetramine and the like. Examples of the aldehyde amine-based vulcanization accelerator include n-butylaldehydeanilene and the like. Examples of the thiourea-based vulcanization accelerator include N,N'-diphenylthiourea, trimethylthiourea, N,N'-diethylthiourea and the like.

One of the basic vulcanization accelerators (E-5) may be used alone, and two or more thereof may be used in combination.

A compounding amount of the basic vulcanization accelerator (E-5) is preferably 0.5 part by mass, more preferably not less than 1.0 part by mass, further preferably not less than 1.5 parts by mass based on 100 parts by mass of the rubber component (A-5) from the viewpoint of activating a polycondensation reaction of the silane coupling agent (C-5). On the other hand, the compounding amount is preferably not more than 3.5 parts by mass, more preferably not more than 3.0 parts by mass, further preferably not more than 2.5 parts by mass from the viewpoint that a large influence is not given to a vulcanization rate.

Besides the above-mentioned components, compounding agents commonly used in the tire industry, for example, softening agents, antioxidants, waxes, stearic acid, zinc oxide, vulcanizing agent such as sulfur, vulcanization accelerators other than those mentioned above and the like can be optionally compounded in the rubber composition according to one of the fifth embodiments.

By compounding a softening agent, enhancement of wet grip performance, dry grip performance and initial grip performance can be expected. The softening agent is not limited particularly, and example thereof includes oils. Examples of the oil include process oils such as a paraffin process oil, an aromatic process oil and a naphthenic process oil. When the oil is compounded, a compounding amount thereof is preferably not less than 20 parts by mass, more preferably not less than 25 parts by mass based on 100 parts by mass of the rubber component (A-5) from the viewpoint of obtaining a sufficient effect resulting from the addition thereof. On the other hand, the compounding amount thereof is preferably not more than 70 parts by mass, more preferably not more than 60 parts by mass from the viewpoint of maintaining abrasion resistance. It is noted that herein the content of oil includes an amount of oil included in an oil-extended rubber.

Specific kinds of the softening agents may be used alone, and two or more kinds thereof may be used in combination.

Examples of vulcanization accelerators other than those mentioned above include sulfeneamide-based, thiazole-based and thiuram-based vulcanization accelerators. Examples of sulfeneamide-based vulcanization accelerators include N-cyclohexyl-2-benzothiazylsulfeneamide, N,N-dicyclohexyl-2-benzothiazylsulfeneamide, N-ter-butyl-2-benzothiazylsulfeneamide and the like. Examples of thiazole-based vulcanization accelerators include 2-mercaptobenzothiazole, cyclohexylamine salt of 2-mercaptobenzothiazole, di-2-benzothiazoryldisulfide and the like. Examples of thiuram-based vulcanization accelerators include tetramethylthiuram monosulfide, tetrabenzylthiuram disulfide, tetrakis(2-ethylhexyl)thiuram disulfide and the like.

When compounding such a vulcanization accelerator, a content thereof is preferably not less than 1 part by

mass, more preferably not less than 2 parts by mass based on 100 parts by mass of the rubber component (A-5) from the viewpoint of achieving sufficient vulcanization. On the other hand, the content is preferably not more than 20 parts by mass, more preferably not more than 15 parts by mass from the viewpoint of securing an enough scorch time.

Specific kinds of the vulcanization accelerators may be used alone, and two or more kinds thereof may be used in combination.

<Method of preparing rubber composition>

In the method of preparing the rubber composition according to one of the fifth embodiments, a kneading step comprises at least two stages comprising a former stage (X1-2) for kneading a starting chemical containing no vulcanizing agent and a latter stage (X2-2) for adding the vulcanizing agent to a kneaded product obtained in the former stage, and kneading a mixture, and the method is characterized in that the former stage (X1-2) is a stage, where a basic vulcanization accelerator (E-5) is added to the starting chemical comprising the rubber component (A-5), the filler (B1-5), the silane coupling agent (C-5) and the organoaluminum compound (D-5), and a mixture is kneaded. Except this characteristic, the rubber composition according to one of the fifth embodiments can be prepared by a usual method. Namely the rubber composition can be prepared by a method of kneading the above-mentioned components with a Banbury mixer, a kneader or an open roll and then conducting vulcanization as required, or by other method.

In one of the fifth embodiments, the kneading step comprises at least two stages comprising the former stage (X1-2) for kneading a starting chemical containing no vulcanizing agent and the latter stage (final stage) (X2-2) for adding the vulcanizing agent to a kneaded product obtained in the former stage (X1-2) and kneading a mixture. Further, the former stage (X1-2) can be further divided into a plurality of stages according to necessity. Here, the vulcanizing agent is a chemical for so-called vulcanization (namely, crosslinking polymer chains of a rubber component as a plastic material), which is typically sulfur.

(Former stage (X1-2) of kneading step)

The former stage (X1-2) of the kneading step is more specifically a stage for mixing, for example, the rubber component (A-5), the filler (B1-5), the silane coupling agent (C-5), the organoaluminum compound (D-5) and the basic vulcanization accelerator (E-5) and kneading a mixture. In the former stage, a softening agent, stearic acid and the like may be further compounded. A stage for preliminary kneading only the rubber component (A-5) is not included in the former stage.

The former stage (X1-2) of the kneading step can be divided into a plurality of stages as desired, for example, in the case where kneading of the above-mentioned chemicals (A-5) to (D-5) is separated into plural times to conduct the kneading stepwise. For example, in the case where the former stage (X1-2) is divided into two stages comprising a first stage and a final stage, the first stage can be a stage for kneading a starting chemical comprising a rubber component (A-5), a part or the whole of silica (B1-5) and a part or the whole of silane coupling agent (C-5) and the final stage can be a stage for compounding a starting chemical comprising a residue of at least either of silica (B1-5) and silane coupling agent (C-5) to a kneaded product obtained from the first stage and then kneading a mixture. In this case, the basic vulcanization accelerator (E-5) may be compounded in at least either of the first stage or the final stage.

Further, the former stage (X1-2) of the kneading step can be divided into three or more stages including an intermediate stage between the first stage and the final stage. The intermediate stage is a stage for compounding a starting chemical comprising a residue of at least either of silica (B1-5) and silane coupling agent (C-5) to a kneaded product obtained from the first stage or the stage just before the intermediate stage. In this case, the basic vulcanization accelerator (E-5) may be at least compounded in any stage from the first stage to the final stage.

Besides the above-mentioned matters, the former stage (X1-2) of the kneading step can be performed in accordance with general method prevailing in a rubber industry.

In the former stage (X1-2) of the kneading step, the discharge temperature of the kneaded product is usually preferably not lower than 150°C, more preferably not lower than 155°C from the viewpoint of proceeding the above-mentioned hydrolysis reaction and polycondensation reaction satisfactorily. On the other hand, the discharge temperature is usually preferably not higher than 180°C, more preferably not higher than 175°C from the viewpoint of preventing gelation inside the rubber and securing good processability. A kneading time is not limited particularly as far as the kneading is achieved sufficiently, and is usually preferably not less than 10 seconds, more preferably not less than 30 seconds, more preferably not less than 60 seconds. On the other hand, the kneading time is usually preferably not more than 20 minutes, more preferably not more than 10 minutes. These discharge temperature and kneading time can vary depending on how many stages are formed by dividing the first stage and depending on kinds and amounts of chemicals to be compounded at the respective stages. A person skilled in the art can decide appropriately optimum discharge temperature and kneading time under the respective conditions.

(Latter stage (X2-2) of kneading step)

The latter stage (X2-2) of the kneading step is a final stage of the kneading step for mixing the vulcanizing agent and other remaining chemicals to a kneaded product obtained in the former kneading step and kneading a mixture. The latter stage of the kneading step can be performed in accordance with general method prevailing in a rubber industry.

<Application>

The rubber composition according to one of the fifth embodiments can be used for various applications, making the best use of characteristics thereof, and among them, can be used as rubber compositions for a tire. When the rubber composition according to one of the fifth embodiments is used for a rubber composition for a tire, it can be used for various members constituting the tire, for example, for a tread including a base tread, an inner liner, a side wall and the like, and from characteristics thereof, is preferably used for a tread (a tire tread).

When the rubber composition according to one of the fifth embodiments is used for a tire, the tire can be produced from the rubber composition according to one of the fifth embodiments by a usual method. Namely, an unvulcanized tire is formed by kneading a mixture obtained by appropriately compounding the above-mentioned components as required, extrusion-processing a kneaded product to a shape of each tire member at an unvulcanized stage, and forming by a usual forming method on a tire building machine. A tire can be produced by subjecting this unvulcanized tire to heating and compressing in a vulcanizer, and by putting air in the tire, a pneumatic tire can be produced.

While not intending to be bound in any way by theory, it can be considered that an effect of using an organoaluminum compound (D-5) instead of aluminum hydroxide is exhibited as follows. Namely, while aluminum hydroxide contributes to improvement of wet grip performance, it cannot help but lower abrasion resistance since its particle size is relatively large and it does not have bonding point with the rubber. Improvement of abrasion resistance can be expected to a certain extent by making a particle size smaller. On the other hand, there is a problem such that room for improvement of wet grip performance decreases. However, an organoaluminum compound (D-5) is a compound generating aluminum hydroxide by hydrolysis, and a mode of hydrolysis thereof is similar to that of the silane coupling agent (C-5). Therefore, moisture on a surface of the filler is consumed highly efficiently in cooperation with the silane coupling agent (C-5), and a shearing strength becomes large at the time of kneading. As a result, it is considered that kneading is conducted sufficiently and dispersibility of the filler is improved. Further, it is considered that in the same manner as a reaction of the silane coupling agent (C-5), the organoaluminum compound (D-5) reacts with the rubber to enhance an effect of reinforcing the rubber, thereby improving abrasion resistance.

Further, in one of the fifth embodiments, by compounding the basic vulcanization accelerator in the former stage (X1-2) of the kneading step, it is expected that an effect resulting from compounding of the organoaluminum compound (D-5) can be maintained and complemented. Namely, the organoaluminum compound (D-5) has a high reactivity with water, is hydrolyzed relatively easily and produces the above-mentioned desirable effect, while there is a concern about delayed polycondensation reaction of the silane coupling agent (C-5). Therefore, by compounding the basic vulcanization accelerator (E-5) in the former stage (X1-2) of the kneading step, acceleration of the polycondensation reaction can be expected.

EXAMPLE

The present invention is then explained by means of Examples, but is not limited to the Examples.

A variety of chemicals used herein will be explained below. The various chemicals were subjected to refining by a usual method according to necessity.

<Various chemicals used for preparation of rubber composition>

S-SBR: BUNA VSL 2525-0 available from LANXESS Japan (solution-polymerized SBR, bonded styrene amount: 25% by mass, vinyl content: 25 mole %, Tg=-49°C)

Silica A: ULTRASIL VN3 (CTAB specific surface are: 165 $m^2/g$) ($N_2SA$: 175 $m^2/g$) manufactured by Evonik Degussa GmbH

Silica B: Zeosil HRS1200MP (CTAB specific surface are: 195 $m^2/g$) ($N_2SA$: 200 $m^2/g$) available from Solvay Japan, Ltd.

Silica C: Zeosil Premium200MP (CTAB specific surface are: 200 $m^2/g$) ($N_2SA$: 220 $m^2/g$) available from Solvay Japan, Ltd.

Silica D: Zeosil 1115MP (CTAB specific surface are: 105 $m^2/g$) ($N_2SA$: 115 $m^2/g$) available from Solvay Japan, Ltd.

Carbon black: N220 ($N_2SA$: 114 $m^2/g$) manufactured by Mitsubishi Chemical Corporation

Aluminum hydroxide: Higilite H-43 (brand name) (average primary particle size: 0.75 μm) manufactured by SHOWA DENKO K.K.

Organoaluminum compound: Aluminum isopropylate (chemical compound name) PADM (brand name) manufactured by Kawaken Fine Chemicals Co., Ltd.

Oil: TDAE manufactured by JX Nippon Oil & Energy Corporation Silane coupling agent A: Si69 (bis(3-triethoxysilylpropyl)tetrasulfide) manufactured by Evonik Degussa GmbH

Silane coupling agent B: NXT Silane (3-octanoylthiopropyltriethoxysilane) available from Momentive Performance Materials Inc.

Silane coupling agent C: NXT-Z45 (a copolymer of a linking unit A and a linking unit B (linking unit A: 55 mole %, linking unit B1-45 mole %)) available from Momentive Performance Materials Inc.

Antioxidant: NOCRAC 6C (N-phenyl-N'-(1,3-dimethylbutyl)-p-phenylenediamine) (6PPD) manufactured by Ouchi Shinko Chemical Industrial Co., Ltd.

Wax: Ozoace 0355 manufactured by Nippon Seiro Co., Ltd.

Stearic acid: Bead stearic acid TSUBAKI manufactured by NOF Corporation
Zinc oxide: Class 2 zinc oxide manufactured by MITSUI MINING & SMELTING CO., LTD
Vulcanization accelerator A: Nocceler NS manufactured by Ouchi Shinko Chemical Industrial Co., Ltd.

Vulcanization accelerator B: Nocceler CZ (N-cyclo-hexyl-2-benzothiazolylsulfeneamide: CBS) manufactured by Ouchi Shinko Chemical Industrial Co., Ltd.

Basic vulcanization accelerator: Nocceler D (1,3-diphenylguanidine: DPG) manufactured by Ouchi Shinko Chemical Industrial Co., Ltd. Sulfur: Powdered sulfur manufactured by Tsurumi Chemical Industry Co., Ltd.

<First embodiment>

Examples 1 to 3 and Comparative Examples 1 to 5 relating to the first embodiment are shown below.

<Preparation of rubber composition for tire>

Materials other than sulfur and vulcanization accelerators were subjected to kneading at 150°C for five minutes in accordance with the formulations shown in Table 1 using a 1.7 liter Banbury mixer manufactured by Kobe Steel, Ltd. to obtain a kneaded product. Subsequently sulfur and a vulcanization accelerator A were added to the obtained kneaded product, and a mixture was subjected to kneading at 80°C for five minutes using an open roll to obtain an unvulcanized rubber composition. The obtained unvulcanized rubber composition was subjected to press-vulcanization at 170°C for 20 minutes with a 2 mm thick metal mold to obtain a vulcanized rubber composition. The obtained unvulcanized rubber composition was molded into a form of a tread, and an extrudate was laminated with other tire members on a tire molding machine to form an unvulcanized tire, followed by vulcanization at 170°C for 12 minutes to produce a test tire (tire size: 195/65R15).

<Evaluation>

(Wet grip index)

A test piece was cut out from the vulcanized rubber composition obtained above, and while spraying water against the test piece, making sure that a water film could be formed on a top of the test piece, and increasing a linear speed of the test piece up to 7 km/h, a dynamic friction coefficient (μ) was measured in accordance with a known measuring method using a Dynamic Friction Tester (D.F. Tester) manufactured by NIPPO LTD. Assuming that a wet grip index of a reference comparative example was 100, each of the dynamic friction coefficients (μ) of the respective formulations was obtained by the following equation and was indicated by an index. The larger the dynamic friction coefficient (μ) is and the larger the wet grip index is, the higher the wet grip performance and safety during running are.

$$(\text{Wet grip index}) = (\mu \text{ of each formulation} \div (\mu \text{ of Reference Comparative Example}) \times 100$$

(Fuel efficiency index)

A test piece was cut out from each of the vulcanized rubber compositions and a loss tangent (tanδ) of each

vulcanized rubber sheet at 70°C was measured at an initial strain of 10%, a dynamic strain of 1% and a frequency of 10 Hz using a viscoelasticity spectrometer manufactured by Ueshima Seisakusho Co., Ltd. Assuming that a fuel efficiency index of a reference comparative example was 100, tanδ of each formulation was obtained by the following equation and was indicated by an index. The lower the tanδ value is and the larger the fuel efficiency index is, the more excellent the fuel efficiency is.

$$(\text{Index of fuel efficiency}) = (\tan\delta \text{ of Reference Comparative Example}) \div (\tan\delta \text{ of each formulation}) \times 100$$

(Breaking strength index of rubber)

The obtained vulcanized rubber composition was subjected to tensile test according to JIS K6251 using a No.3 dumbbell type test piece, to measure a strength at break (TB) and an elongation at break (EB) (%). And, a TB×EB1-2 value was determined as a breaking strength. A breaking strength of each formulation was obtained by the following equation and was indicated by an index, assuming that a breaking strength index of a reference comparative example was 100. The larger the index is, the more excellent the breaking strength is.

$$(\text{Breaking strength index}) = (\text{TB}\times\text{EB1}-2 \text{ of each formulation}) / (\text{TB}\times\text{EB1}-2 \text{ of Reference Comparative Example}) \times 100$$

(Abrasion resistance index)

An abrasion loss of a vulcanized rubber composition was measured with a Lambourn abrasion testing machine under the conditions of a room temperature, a load of 1.0 kgf, and a slip rate of 30%. Assuming that an abrasion resistance index of a reference comparative example was 100, an abrasion loss of each formulation was obtained by the following equation and was indicated by an index. The smaller the abrasion loss is and the larger the abrasion resistance index is, abrasion resistance is excellent.

$$(\text{Abrasion resistance index}) = (\text{Abrasion loss of Reference Comparative Example}) / (\text{Abrasion loss of each formulation}) \times 100$$

(Results)

The results are shown in Table 1.

Table 1

| | Example | | | Comparative Example | | | | |
|---|---|---|---|---|---|---|---|---|
| | 1 | 2 | 3 | 1 | 2 | 3 | 4 | 5 |
| Compounded amount (part by mass) | | | | | | | | |
| S-SBR | 100 | 100 | 100 | 100 | 100 | 100 | 100 | 100 |
| Silica A | 83 | 82 | 81 | 85 | 83 | 82 | 81 | 80 |
| Carbon black | 10 | 10 | 10 | 10 | 10 | 10 | 10 | 10 |
| Aluminum hydroxide | 0 | 0 | 0 | 0 | 5 | 10 | 15 | 20 |

(continued)

| | Example | | | Comparative Example | | | | |
|---|---|---|---|---|---|---|---|---|
| | 1 | 2 | 3 | 1 | 2 | 3 | 4 | 5 |
| Organoaluminum compound | 12.5 | 25 | 37.5 | 0 | 0 | 0 | 0 | 0 |
| Oil | 50 | 50 | 50 | 50 | 50 | 50 | 50 | 50 |
| vSilane coupling agent A | 8.3 | 8.2 | 8.1 | 8.5 | 8.3 | 8.2 | 8.1 | 8 |
| Antioxidant | 2 | 2 | 2 | 2 | 2 | 2 | 2 | 2 |
| Wax | 2 | 2 | 2 | 2 | 2 | 2 | 2 | 2 |
| Stearic acid | 2 | 2 | 2 | 2 | 2 | 2 | 2 | 2 |
| Zinc oxide | 2 | 2 | 2 | 2 | 2 | 2 | 2 | 2 |
| Vulcanization accelerator A | 2.5 | 2.5 | 2.5 | 2.5 | 2.5 | 2.5 | 2.5 | 2.5 |
| Sulfur | 1.5 | 1.5 | 1.5 | 1.5 | 1.5 | 1.5 | 1.5 | 1.5 |
| Evaluation | | | | | | | | |
| Wet grip index | 105 | 107 | 110 | 100 | 102 | 104 | 107 | 110 |
| Fuel efficiency index | 105 | 107 | 107 | 100 | 105 | 105 | 105 | 105 |
| Rubber breaking strength index | 108 | 115 | 127 | 100 | 100 | 104 | 97 | 97 |
| Abrasion resistance index | 104 | 102 | 100 | 100 | 98 | 96 | 94 | 92 |

<Second embodiment>

Examples 4 to 10 and Comparative Examples 6 to 8 relating to the second embodiment are shown below.

<Preparation of rubber composition for tire>

Materials other than sulfur and vulcanization accelerators were subjected to kneading at 150°C for five minutes in accordance with the formulations shown in Table 2 using a 1.7 liter Banbury mixer manufactured by Kobe Steel, Ltd. to obtain a kneaded product. Subsequently sulfur and a vulcanization accelerator A were added to the obtained kneaded product, and a mixture was subjected to kneading at 80°C for five minutes using an open roll to obtain an unvulcanized rubber composition. The obtained unvulcanized rubber composition was subjected to press-vulcanization at 170°C for 20 minutes with a 2 mm thick metal mold to obtain a vulcanized rubber composition. The obtained unvulcanized rubber composition was molded into a form of a tread, and an extrudate was laminated with other tire members on a tire molding machine to form an unvulcanized tire, followed by vulcanization at 170°C for 12 minutes to produce a test tire (tire size: 195/65R15).

<Evaluation>

(Wet grip index)

A test piece was cut out from the vulcanized rubber composition obtained above, and while spraying water against the test piece, making sure that a water film could be formed on a top of the test piece, and increasing a linear speed of the test piece up to 7 km/h, a dynamic friction coefficient ($\mu$) was measured in accordance with a known measuring method using a Dynamic Friction Tester (D.F. Tester) manufactured by NIPPO LTD. Assuming that a wet grip index of a reference comparative example was 100, each of the dynamic friction coefficients ($\mu$) of the respective formulations was obtained by the following equation and was indicated by an index. The larger the dynamic friction coefficient ($\mu$) is and the larger the wet grip index is, the higher the wet grip performance and safety during running are.

$$(\text{Wet grip index}) = (\mu \text{ of each formulation} \div (\mu \text{ of Reference Comparative Example}\ ) \times 100$$

(Fuel efficiency index)

A test piece was cut out from each of the vulcanized rubber compositions and a loss tangent ($\tan\delta$) of each

vulcanized rubber sheet at 70°C was measured at an initial strain of 10%, a dynamic strain of 1% and a frequency of 10 Hz using a viscoelasticity spectrometer manufactured by Ueshima Seisakusho Co., Ltd. Assuming that a fuel efficiency index of a reference comparative example was 100, tanδ of each formulation was obtained by the following equation and was indicated by an index. The lower the tanδ value is and the larger the fuel efficiency index is, the more excellent the fuel efficiency is.

$$(\text{Index of fuel efficiency}) = (\tan\delta \text{ of Reference Comparative Example}) \div (\tan\delta \text{ of each formulation}) \times 100$$

(Breaking strength index of rubber)

The obtained vulcanized rubber composition was subjected to tensile test according to JIS K6251 using a No.3 dumbbell type test piece, to measure a strength at break (TB) and an elongation at break (EB) (%). And, a TB×EB1-2 value was determined as a breaking strength. A breaking strength of each formulation was obtained by the following equation and was indicated by an index, assuming that a breaking strength index of a reference comparative example was 100. The larger the index is, the more excellent the breaking strength is.

$$(\text{Breaking strength index}) = (\text{TB×EB1–2 of each formulation})/(\text{TB×EB1–2 of Reference Comparative Example}) \times 100$$

(Abrasion resistance index)

An abrasion loss of a vulcanized rubber composition was measured with a Lambourn abrasion testing machine under the conditions of a room temperature, a load of 1.0 kgf, and a slip rate of 30%. Assuming that an abrasion resistance index of a reference comparative example was 100, an abrasion loss of each formulation was obtained by the following equation and was indicated by an index. The smaller the abrasion loss is and the larger the abrasion resistance index is, abrasion resistance is excellent.

$$(\text{Abrasion resistance index}) = (\text{Abrasion loss of Reference Comparative Example}) / (\text{Abrasion loss of each formulation}) \times 100$$

(Results)

The results are shown in Table 2.

Table 2

| | Comparative Example | | | Example | | | | | | |
|---|---|---|---|---|---|---|---|---|---|---|
| | 6 | 7 | 8 | 4 | 5 | 6 | 7 | 8 | 9 | 10 |
| Compounded amount (part by mass) | | | | | | | | | | |
| S-SBR | 100 | 100 | 100 | 100 | 100 | 100 | 100 | 100 | 100 | 100 |
| Silica A | 82 | 82 | 82 | 82 | 82 | 82 | 82 | 82 | 82 | 82 |
| Carbon black | 10 | 10 | 10 | 10 | 10 | 10 | 10 | 10 | 10 | 10 |
| Aluminum hydroxide | 25 | 25 | 25 | 0 | 0 | 0 | 0 | 0 | 0 | 0 |

(continued)

| | Comparative Example | | | Example | | | | | | |
|---|---|---|---|---|---|---|---|---|---|---|
| | 6 | 7 | 8 | 4 | 5 | 6 | 7 | 8 | 9 | 10 |
| Organoaluminum compound | 0 | 0 | 0 | 5 | 10 | 15 | 20 | 20 | 20 | 20 |
| Oil | 50 | 50 | 50 | 50 | 50 | 50 | 50 | 50 | 50 | 50 |
| vSilane coupling agent A (Si69) | 1.64 | 8.2 | 9.84 | - | - | - | - | - | - | - |
| Silane coupling agent B (NXT) | - | - | - | 1.64 | 3.28 | 4.92 | 6.56 | 8.2 | 9.84 | - |
| Silane coupling agent C (NXT-Z45) | - | - | - | - | - | - | - | - | - | 8.2 |
| Antioxidant | 2 | 2 | 2 | 2 | 2 | 2 | 2 | 2 | 2 | 2 |
| Wax | 2 | 2 | 2 | 2 | 2 | 2 | 2 | 2 | 2 | 2 |
| Stearic acid | 2 | 2 | 2 | 2 | 2 | 2 | 2 | 2 | 2 | 2 |
| Zinc oxide | 2 | 2 | 2 | 2 | 2 | 2 | 2 | 2 | 2 | 2 |
| Vulcanization accelerator A | 2.5 | 2.5 | 2.5 | 2.5 | 2.5 | 2.5 | 2.5 | 2.5 | 2.5 | 2.5 |
| Sulfur | 1.5 | 1.5 | 1.5 | 1.5 | 1.5 | 1.5 | 1.5 | 1.5 | 1.5 | 1.5 |
| Evaluation | | | | | | | | | | |
| Wet grip index | 100 | 109 | 104 | 104 | 106 | 109 | 112 | 112 | 107 | 110 |
| Fuel efficiency index | 100 | 102 | 100 | 105 | 97 | 101 | 105 | 110 | 105 | 108 |
| Rubber breaking strength index | 100 | 125 | 119 | 106 | 113 | 119 | 125 | 138 | 123 | 135 |
| Abrasion resistance index | 100 | 128 | 122 | 109 | 116 | 122 | 128 | 147 | 128 | 145 |

<Third embodiment>

Examples 11 to 13 and Comparative Examples 9 to 17 relating to the third embodiment are shown below.

<Preparation of rubber composition for tire>

Materials other than sulfur and vulcanization accelerators were subjected to kneading at 150°C for five minutes in accordance with the formulations shown in Table 2 using a 1.7 liter Banbury mixer manufactured by Kobe Steel, Ltd. to obtain a kneaded product. Subsequently sulfur and a vulcanization accelerator A were added to the obtained kneaded product, and a mixture was subjected to kneading at 80°C for five minutes using an open roll to obtain an unvulcanized rubber composition. The obtained unvulcanized rubber composition was subjected to press-vulcanization at 170°C for 20 minutes with a 2 mm thick metal mold to obtain a vulcanized rubber composition. The obtained unvulcanized rubber composition was molded into a form of a tread, and an extrudate was laminated with other tire members on a tire molding machine to form an unvulcanized tire, followed by vulcanization at 170°C for 12 minutes to produce a test tire (tire size: 195/65R15).

<Evaluation>

(Un-reactivity index of coupling agent)

An un-vulcanized rubber composition was cut into pieces which were subjected to extraction in ethanol for 24 hours. An amount of an un-reacted coupling agent extracted in an extract was measured with a gas chromatography, and a ratio (% by mass) of the un-reacted coupling agent was calculated from the compounded amount of the coupling agent. Assuming that an un-reactivity index of the coupling agent of the reference comparative example was 100, an un-reactivity index of the coupling agent of each formulation was obtained by the following equation and was indicated by an index. As the ratio of the un-reacted coupling agent is smaller and the un-reactivity index of the coupling agent is smaller, it means that an amount of the un-reacted coupling agent being present in the un-vulcanized rubber composition after termination of the kneading step is small. Namely, it means that a larger amount of the coupling agent was reacted in the kneading step, which is satisfactory.

$$(\text{Un-reactivity index of coupling agent}) = (\text{Ratio of an amount of un-reacted coupling agent of each formulation}) \div (\text{Ratio of an amount of un-reacted coupling agent of Reference Comparative Example}) \times 100$$

(Wet grip index)

A test piece was cut out from the vulcanized rubber composition obtained above, and while spraying water against the test piece, making sure that a water film could be formed on a top of the test piece, and increasing a linear speed of the test piece up to 7 km/h, a dynamic friction coefficient ($\mu$) was measured in accordance with a known measuring method using a Dynamic Friction Tester (D.F. Tester) manufactured by NIPPO LTD. Assuming that a wet grip index of a reference comparative example was 100, each of the dynamic friction coefficients ($\mu$) of the respective formulations was obtained by the following equation and was indicated by an index. The larger the dynamic friction coefficient ($\mu$) is and the larger the wet grip index is, the higher the wet grip performance and safety during running are.

$$(\text{Wet grip index}) = (\mu \text{ of each formulation} \div (\mu \text{ of Reference Comparative Example }) \times 100$$

(Fuel efficiency index)

A test piece was cut out from each of the vulcanized rubber compositions and a loss tangent (tanδ) of each vulcanized rubber sheet at 70°C was measured at an initial strain of 10%, a dynamic strain of 1% and a frequency of 10 Hz using a viscoelasticity spectrometer manufactured by Ueshima Seisakusho Co., Ltd. Assuming that a fuel efficiency index of a reference comparative example was 100, tanδ of each formulation was obtained by the following equation and was indicated by an index. The lower the tanδ value is and the larger the fuel efficiency index is, the more excellent the fuel efficiency is.

$$(\text{Index of fuel efficiency}) = (\tan\delta \text{ of Reference Comparative Example}) \div (\tan\delta \text{ of each formulation}) \times 100$$

(Breaking strength index of rubber)

The obtained vulcanized rubber composition was subjected to tensile test according to JIS K6251 using a No.3 dumbbell type test piece, to measure a strength at break (TB) and an elongation at break (EB) (%). And, a TB×EB1-2 value was determined as a breaking strength. A breaking strength of each formulation was obtained by the following equation and was indicated by an index, assuming that a breaking strength index of a reference comparative example was 100. The larger the index is, the more excellent the breaking strength is.

$$(\text{Breaking strength index}) = (\text{TB×EB1–2 of each formulation})/(\text{ TB×EB1–2 of Reference Comparative Example}) \times 100$$

(Abrasion resistance index)

An abrasion loss of a vulcanized rubber composition was measured with a Lambourn abrasion testing machine

under the conditions of a room temperature, a load of 1.0 kgf, and a slip rate of 30%. Assuming that an abrasion resistance index of a reference comparative example was 100, an abrasion loss of each formulation was obtained by the following equation and was indicated by an index. The smaller the abrasion loss is and the larger the abrasion resistance index is, abrasion resistance is excellent.

$$\text{(Abrasion resistance index)} = \text{(Abrasion loss of Reference Comparative Example)} / \text{(Abrasion loss of each formulation)} \times 100$$

(Results)

The results are shown in Table 3.

Table 3

| | Comparative Example | | | | | | | | Example | | | Com. Ex. |
|---|---|---|---|---|---|---|---|---|---|---|---|---|
| | 9 | 10 | 11 | 12 | 13 | 14 | 15 | 16 | 11 | 12 | 13 | 17 |
| Compounded amount (part by mass) | | | | | | | | | | | | |
| S-SBR | 100 | 100 | 100 | 100 | 100 | 100 | 100 | 100 | 100 | 100 | 100 | 100 |
| Silica A (CATB: 165 $m^2/g$, $N_2SA$: 175 $m^2/g$) | 85 | | - | - | 82 | - | - | - | 82 | - | - | - |
| Silica B (CATB: 195 $m^2/g$, $N_2SA$: 200 $m^2/g$) | - | 85 | - | - | - | 82 | - | - | - | 82 | - | - |
| Silica C (CATB: 200 $m^2/g$, $N_2SA$: 220 $m^2/g$) | - | | 85 | - | - | - | 82 | - | - | - | 82 | - |
| Silica D (CATB: 105 $m^2/g$, $N_2SA$: 115 $m^2/g$) | - | | - | 85 | - | - | - | 82 | - | - | - | 82 |
| Carbon black | 10 | 10 | 10 | 10 | 10 | 10 | 10 | 10 | 10 | 10 | 10 | 10 |
| Aluminum hydroxide | - | | - | - | 25 | 25 | 25 | 25 | - | - | - | - |
| Organoaluminum compound | - | | - | - | - | - | - | - | 20 | 20 | 20 | 20 |
| Oil | 50 | 50 | 50 | 50 | 50 | 50 | 50 | 50 | 50 | 50 | 50 | 50 |
| Silane coupling agent A | 8.5 | 8.5 | 8.5 | 8.5 | 8.2 | 8.2 | 8.2 | 8.2 | 8.2 | 8.2 | 8.2 | 8.2 |
| Antioxidant | 2 | 2 | 2 | 2 | 2 | 2 | 2 | 2 | 2 | 2 | 2 | 2 |
| Wax | 2 | 2 | 2 | 2 | 2 | 2 | 2 | 2 | 2 | 2 | 2 | 2 |
| Stearic acid | 2 | 2 | 2 | 2 | 2 | 2 | 2 | 2 | 2 | 2 | 2 | 2 |
| Zinc oxide | 2 | 2 | 2 | 2 | 2 | 2 | 2 | 2 | 2 | 2 | 2 | 2 |
| Vulcanization accelerator A | 2.5 | 2.5 | 2.5 | 2.5 | 2.5 | 2.5 | 2.5 | 2.5 | 2.5 | 2.5 | 2.5 | 2.5 |
| Sulfur | 1.5 | 1.5 | 1.5 | 1.5 | 1.5 | 1.5 | 1.5 | 1.5 | 1.5 | 1.5 | 1.5 | 1.5 |
| Evaluation | | | | | | | | | | | | |
| Un-reactivity index of coupling agent | 100 | 100 | 100 | 100 | 100 | 100 | 100 | 100 | 3 | 3 | 3 | 3 |
| Wet grip index | 100 | 97 | 95 | 107 | 107 | 104 | 102 | 114 | 112 | 109 | 107 | 119 |

(continued)

| | Comparative Example | | | | | | | | Example | | | Com. Ex. |
|---|---|---|---|---|---|---|---|---|---|---|---|---|
| | 9 | 10 | 11 | 12 | 13 | 14 | 15 | 16 | 11 | 12 | 13 | 17 |
| Fuel efficiency index | 100 | 102 | 104 | 106 | 100 | 102 | 104 | 106 | 102 | 105 | 107 | 109 |
| Rubber breaking strength index | 100 | 105 | 109 | 70 | 98 | 103 | 107 | 68 | 102 | 109 | 113 | 70 |
| Abrasion resistance index | 100 | 105 | 109 | 80 | 96 | 101 | 105 | 76 | 102 | 110 | 114 | 86 |

<Fourth embodiment>

Examples 14 to 17 and Comparative Examples 18 to 21 relating to the fourth embodiment are shown below.

<Preparation of rubber composition for tire>

(Step I (former stage of kneading step))

Kneading was performed for five minutes in accordance with the formulations shown in Table 4 using a 1.7 liter Banbury mixer manufactured by Kobe Steel, Ltd., followed by holding of a kneaded product at a predetermined discharge temperature and a predetermined holding time shown in Table 4 to obtain a kneaded product.

(Step II (latter stage of kneading step))

Subsequently, each chemical was added to the obtained kneaded product in accordance with the formulation shown in Table 4, followed by kneading at 80°C for five minutes using an open roll to obtain an unvulcanized rubber composition.

(Vulcanizing step)

The obtained unvulcanized rubber composition was subjected to vulcanization at 170°C for 20 minutes to obtain a vulcanized rubber composition.

<Evaluation>

(Processability)

One kg of an unvulcanized rubber composition was wound in a width of 20 cm and a thickness of 4 mm on an 8-inch open roll and was subjected to kneading until a temperature of the unvulcanized rubber composition reached 50±10°C. Then the unvulcanized rubber composition was cut into a rubber sheet and a surface roughness of a rubber compound was observed visually to evaluate the surface roughness under the following criteria.
○: Surface is smooth and edges are also smooth.
Δ: Surface is rough and edges are waved (forming into a sheet is possible).
×: Surface roughness is significant and forming into a sheet is difficult.

(Wet grip index)

A test piece was cut out from each of the vulcanized rubber compositions and a loss tangent (low temperature tanδ) of each vulcanized rubber sheet at 70°C was measured at an initial strain of 10%, a dynamic strain of 0.1% and a frequency of 10 Hz using a viscoelasticity spectrometer manufactured by Ueshima Seisakusho Co., Ltd. Assuming that a wet grip index of a reference comparative example was 100, tanδ of each formulation was obtained by the following equation and was indicated by an index. The higher the low temperature tanδ value is and the larger the wet grip index is, the more excellent the wet grip performance is and the higher the safety in running is.

(Wet grip index) =

(tanδ of each formulation) / (tanδ of Reference Comparative Example) × 100

(Fuel efficiency index)

A test piece was cut out from each of the vulcanized rubber compositions and a loss tangent (high temperature tanδ) of each vulcanized rubber sheet at 70°C was measured at an initial strain of 10%, a dynamic strain of 1% and a frequency of 10 Hz using a viscoelasticity spectrometer manufactured by Ueshima Seisakusho Co., Ltd. Assuming that a fuel efficiency index of a reference comparative example was 100, tanδ of each formulation was obtained by the following equation and was indicated by an index. The lower the high temperature tanδ value is and the larger the fuel efficiency index is, the more excellent the fuel efficiency is.

(Index of fuel efficiency) =

(tanδ of Reference Comparative Example) / (tanδ of each formulation) × 100

(Abrasion resistance index)

An abrasion loss of each vulcanized rubber composition was measured with a Lambourn abrasion testing machine under the conditions of a room temperature, a load of 1.0 kgf, and a slip rate of 30%. Assuming that an abrasion resistance index of a reference comparative example was 100, an abrasion loss of each formulation was obtained by the following equation and was indicated by an index. The smaller the abrasion loss is and the larger the abrasion resistance index is, abrasion resistance is excellent.

(Abrasion resistance index) =

(Abrasion loss of Reference Comparative Example) / (Abrasion loss of each formulation) × 100

(Results)

The results are shown in Table 4.

Table 4

| | Comparative Example | | | | Example | | | |
|---|---|---|---|---|---|---|---|---|
| | 18 | 19 | 20 | 21 | 14 | 15 | 16 | 17 |
| Compounded amount (part by mass) | | | | | | | | |
| Step I | | | | | | | | |
| S-SBR | 100 | 100 | 100 | 100 | 100 | 100 | 100 | 100 |
| Silica A | 80 | 80 | 80 | 80 | 80 | 80 | 80 | 80 |
| Carbon black | 10 | 10 | 10 | 10 | 10 | 10 | 10 | 10 |
| Organoaluminum compound | 20 | 20 | 20 | 20 | 20 | 20 | 20 | 20 |
| Oil | 30 | 30 | 30 | 30 | 30 | 30 | 30 | 30 |
| Silane coupling agent A | 8 | 8 | 8 | 8 | 8 | 8 | 8 | 8 |
| Stearic acid | 2 | 2 | 2 | 2 | 2 | 2 | 2 | 2 |

(continued)

| | | | | | | | | |
|---|---|---|---|---|---|---|---|---|
| Step II | | | | | | | | |
| Antioxidant | 2 | 2 | 2 | 2 | 2 | 2 | 2 | 2 |
| Wax | 2 | 2 | 2 | 2 | 2 | 2 | 2 | 2 |
| Zinc oxide | 2 | 2 | 2 | 2 | 2 | 2 | 2 | 2 |
| Vulcanization accelerator B | 2 | 2 | 2 | 2 | 2 | 2 | 2 | 2 |
| Basic vulcanization accelerator | 2 | 2 | 2 | 2 | 2 | 2 | 2 | 2 |
| Sulfur | 1.5 | 1.5 | 1.5 | 1.5 | 1.5 | 1.5 | 1.5 | 1.5 |
| Step III | | | | | | | | |
| Discharge temperature (°C) | 150 | 130 | 190 | 170 | 150 | 170 | 150 | 170 |
| Holding time (sec) | 0 | 30 | 15 | 200 | 15 | 15 | 100 | 100 |
| Evaluation | | | | | | | | |
| Processability | ○ | ○ | × | × | ○ | ○ | ○ | ○ |
| Wet grip index (low temp. tanδ) | 100 | 90 | 105 | 103 | 105 | 107 | 107 | 110 |
| Fuel efficiency index (high temp. tanδ) | 100 | 90 | 107 | 105 | 102 | 103 | 105 | 107 |
| Abrasion resistance index | 100 | 85 | 107 | 105 | 102 | 105 | 107 | 110 |

<Fifth embodiment>

Examples 18 to 20 and Comparative Example 22 relating to the fifth embodiment are shown below.

<Preparation of rubber composition for tire>

(First stage at former stage of kneading step)

Kneading was performed at a discharge temperature of 160°C for five minutes in accordance with the formulations shown in Table 5 using a 1.7 liter Banbury mixer manufactured by Kobe Steel, Ltd. to obtain a kneaded product. In Table 5, with respect to the basic vulcanization accelerator to be introduced at the first stage of the former stage of the kneading step, "introduction in the former half' means introduction of the basic vulcanization accelerator together with the filler and the organoaluminum compound. On the other hand, "introduction in the latter half' means introduction of the basic vulcanization accelerator after an electric power has reached a first peak after introduction of the filler and the organoaluminum compound. In the kneading step, usually an electric power - time curve has two peaks after introduction of the rubber component and the filler, and the first peak is a first peak of the two peaks.

(Second stage at former stage of kneading step)

Subsequently, each chemical was added to the obtained kneaded product in accordance with the formulation shown in Table 5, followed by kneading at a discharge temperature of 150°C for four minutes using a 1.7 liter Banbury mixer manufactured by Kobe Steel, Ltd. to obtain a kneaded product.

(Latter stage of kneading step)

Subsequently, each chemical was added to the obtained kneaded product in accordance with the formulation shown in Table 5, followed by kneading at 80°C for five minutes using an open roll to obtain an unvulcanized rubber composition.

(Vulcanizing step)

The obtained unvulcanized rubber composition was subjected to vulcanization at 170°C for 20 minutes to obtain a vulcanized rubber composition.

<Evaluation>

(Wet grip index)

A test piece was cut out from each of the vulcanized rubber compositions and a loss tangent (low temperature tanδ) of each vulcanized rubber sheet at 0°C was measured at an initial strain of 10%, a dynamic strain of 0.1% and a frequency of 10 Hz using a viscoelasticity spectrometer manufactured by Ueshima Seisakusho Co., Ltd. Assuming that a wet grip index of a reference comparative example was 100, tanδ of each formulation was obtained by the following equation and was indicated by an index. The higher the low temperature tanδ value is and the larger the wet grip index is, the higher the wet grip performance and safety in running are.

$$(\text{Wet grip index}) = (\tan\delta \text{ of each formulation}) / (\tan\delta \text{ of Reference Comparative Example}) \times 100$$

(Fuel efficiency index)

A test piece was cut out from each of the vulcanized rubber compositions and a loss tangent (high temperature tanδ) of each vulcanized rubber sheet at 70°C was measured at an initial strain of 10%, a dynamic strain of 1% and a frequency of 10 Hz using a viscoelasticity spectrometer manufactured by Ueshima Seisakusho Co., Ltd. Assuming that a fuel efficiency index of a reference comparative example was 100, tanδ of each formulation was obtained by the following equation and was indicated by an index. The lower the high temperature tanδ value is and the larger the fuel efficiency index is, the more excellent the fuel efficiency is.

$$(\text{Index of fuel efficiency}) = (\tan\delta \text{ of Reference Comparative Example}) / (\tan\delta \text{ of each formulation}) \times 100$$

(Abrasion resistance index)

An abrasion loss of each vulcanized rubber composition was measured with a Lambourn abrasion testing machine under the conditions of a room temperature, a load of 1.0 kgf, and a slip rate of 30%. Assuming that an abrasion resistance index of a reference comparative example was 100, an abrasion loss of each formulation was obtained by the following equation and was indicated by an index. The smaller the abrasion loss is and the larger the abrasion resistance index is, the more excellent the abrasion resistance is.

$$(\text{Abrasion resistance index}) = (\text{Abrasion loss of Reference Comparative Example}) / (\text{Abrasion loss of each formulation}) \times 100$$

(Results)

The results are shown in Table 5.

Table 5

| | Com. Ex. | Example | | |
|---|---|---|---|---|
| | 22 | 18 | 19 | 20 |
| Compounded amount (part by mass) | | | | |

(continued)

| | Com. Ex. | Example | | |
|---|---|---|---|---|
| | 22 | 18 | 19 | 20 |
| Kneading step | | | | |
| Former stage | | | | |
| First stage | | | | |
| S-SBR | 100 | 100 | 100 | 100 |
| Silica A | 60 | 60 | 60 | 60 |
| Carbon black | 10 | 10 | 10 | 10 |
| Organoaluminum compound | 20 | 20 | 20 | 20 |
| Oil | 40 | 40 | 40 | 40 |
| Silane coupling agent A | 6 | 6 | 6 | 6 |
| Basic vulcanization accelerator (introduction in the former half) | - | 2 | - | - |
| Basic vulcanization accelerator (introduction in the latter half) | | | 2 | |
| Second stage | | | | |
| Silica A | 20 | 20 | 20 | 20 |
| Silane coupling agent A | 2 | 2 | 2 | 2 |
| Oil | 10 | 10 | 10 | 10 |
| Basic vulcanization accelerator | - | - | - | 2 |
| Stearic acid | 2 | 2 | 2 | 2 |
| Latter stage | | | | |
| Antioxidant | 2 | 2 | 2 | 2 |
| Wax | 2 | 2 | 2 | 2 |
| Zinc oxide | 2 | 2 | 2 | 2 |
| Basic vulcanization accelerator | 2 | - | - | - |
| Vulcanization accelerator B | 2 | 2 | 2 | 2 |
| Sulfur | 1.5 | 1.5 | 1.5 | 1.5 |
| Evaluation | | | | |
| Wet grip index (low temp. tanδ) | 100 | 100 | 100 | 102 |
| Fuel efficiency index (high temp. tanδ) | 100 | 101 | 103 | 107 |
| Abrasion resistance index | 100 | 102 | 105 | 110 |

## Claims

1. A rubber composition comprising a starting chemical comprising a rubber component comprising a styrene-butadiene rubber, a filler comprising silica, a silane coupling agent and an organoaluminum compound.

2. The rubber composition of claim 1, wherein the silane coupling agent is a silane coupling agent having a mercapto group and is at least one selected from the group consisting of a silane coupling agent comprising a linking unit A represented by the following formula (I) and a linking unit B represented by the following formula (II) and a silane coupling agent represented by the following formula (III).

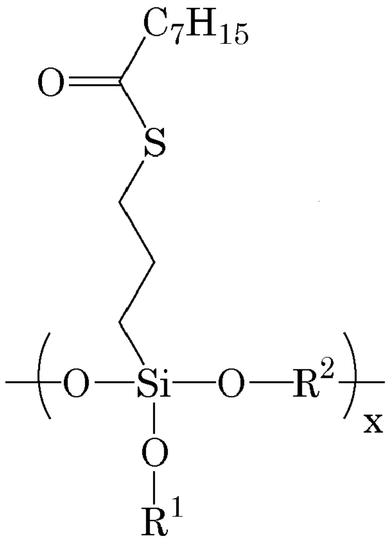

(I)

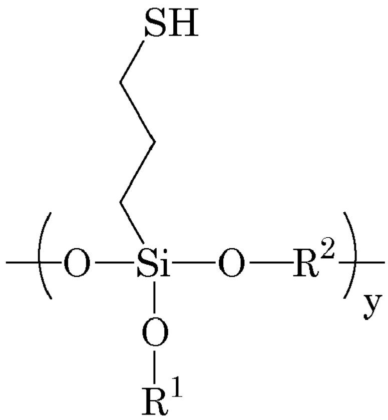

(II)

In the formulae,

x is an integer of 0 or more, and y is an integer of 1 or more.

$R^1$ represents hydrogen, halogen, a branched or un-branched alkyl group having 1 to 30 carbon atoms, a branched or un-branched alkenyl group having 2 to 30 carbon atoms, a branched or un-branched alkynyl group having 2 to 30 carbon atoms, or the alkyl group at the end of which hydrogen has been replaced by a hydroxyl group or a carboxyl group. $R^2$ represents a branched or un-branched alkylene group having 1 to 30 carbon atoms, a branched or un-branched alkenylene group having 2 to 30 carbon atoms, or a branched or un-branched alkynylene group having 2 to 30 carbon atoms. A ring structure may be formed with $R^1$ and $R^2$.

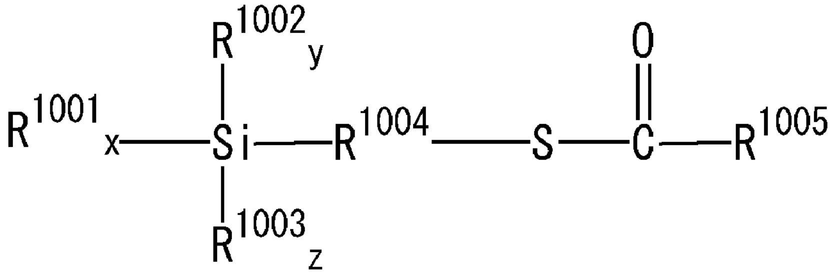

(III)

In the formula,

$R^{1001}$ is a monovalent group selected from -Cl, -Br, $-OR^{1006}$, $-O(O=)CR^{1006}$, $-ON=CR^{1006}R^{1007}$,

$-ON=CR^{1006}R^{1007}$, $-NR^{1006}R^{1007}$ and $(OSiR^{1006}R^{1007})_h(OSiR^{1006}R^{1007}R^{1008})$ ($R^{1006}$, $R^{1007}$ and $R^{1008}$ may be the same or different, each of them is a hydrogen atom or a monovalent hydrocarbon group having 1 to 18 carbon atoms, and an average value of h is 1 to 4).

$R^{1002}$ is $R^{1001}$, a hydrogen atom or a monovalent hydrocarbon group having 1 to 18 carbon atoms.

$R^{1003}$ is $R^{1001}$, $R^{1002}$, a hydrogen atom, or a $[O(R^{1009}O)_j]_{0.5}$- group ($R^{1009}$ is an alkylene group having 1 to 18 carbon atoms, j is an integer of 1 to 4).

$R^{1004}$ is a divalent hydrocarbon group having 1 to 18 carbon atoms.

$R^{1005}$ is a monovalent hydrocarbon group having 1 to 18 carbon atoms. x, y and z are numerals satisfying relations of $x+y+2z=3$, $0\leq x\leq 3$, $0\leq y\leq 2$ and $0\leq z\leq 1$.

**3.** The rubber composition of claim 1, wherein a CTAB specific surface area of silica is 100 $m^2/g$ or more and a BET specific surface area by nitrogen adsorption of silica is 110 $m^2/g$ or more.

**4.** The rubber composition of claim 3, wherein the CTAB specific surface area of silica is 180 $m^2/g$ or more and the BET specific surface area by nitrogen adsorption of silica is 185 $m^2/g$ or more.

**5.** The rubber composition of any one of claims 1 to 4, wherein the filler further comprises carbon black.

**6.** The rubber composition of claim 5, wherein a compounding amount of the silica is 50 to 150 parts by mass, a compounding amount of the carbon black is 5 to 50 parts by mass, and a compounding amount of the organoaluminum compound is 5 to 45 parts by mass based on 100 parts by mass of the rubber component and a compounding amount of the silane coupling agent is 1 to 20 parts by mass based on 100 parts by mass of the silica.

**7.** The rubber composition of any one of claims 1 to 6, wherein the organoaluminum compound is an aluminum alcolate represented by the formula (1):

$$Al(OR^a)(OR^b)(OR^c)_3 \qquad (1)$$

wherein $R^a$, $R^b$ and $R^c$ independently represent aliphatic hydrocarbon groups, respectively.

**8.** A tire tread produced using the rubber composition of any one of claims 1 to 7.

**9.** A tire having the tire tread of claim 8.

**10.** A method of preparing a rubber composition comprising a starting chemical comprising a rubber component comprising a styrene-butadiene rubber, a filler comprising silica, a silane coupling agent and an organoaluminum compound, the method comprising: a kneading step comprising at least two stages comprising a former stage for kneading the starting chemical containing no vulcanization chemical and a latter stage for adding a vulcanization chemical to a kneaded product obtained in the former stage and kneading a mixture, wherein in the former stage, a discharge temperature of the kneaded product is within a predetermined temperature range and the kneaded product is held at the discharge temperature for a predetermined period of time in order to remove alcohol generated during the kneading.

**11.** A method of preparing a rubber composition comprising a starting chemical comprising a rubber component comprising a styrene-butadiene rubber, a filler comprising silica, a silane coupling agent and an organoaluminum compound, the method comprising: a kneading step comprising at least two stages comprising a former stage for kneading the starting chemical containing no vulcanizing agent and a latter stage for adding the vulcanizing agent to a kneaded product obtained in the former stage and kneading a mixture,

wherein the former stage is a stage, where a basic vulcanization accelerator is added to the starting chemical comprising the rubber component, the filler, the silane coupling agent and the organoaluminum compound, and a mixture is kneaded.

## INTERNATIONAL SEARCH REPORT

International application No. PCT/JP2017/019082

A. CLASSIFICATION OF SUBJECT MATTER
*C08L9/06*(2006.01)i, *B60C1/00*(2006.01)i, *C08K3/04*(2006.01)i, *C08K3/36*(2006.01)i, *C08K5/05*(2006.01)i, *C08K5/54*(2006.01)i

According to International Patent Classification (IPC) or to both national classification and IPC

B. FIELDS SEARCHED

Minimum documentation searched (classification system followed by classification symbols)
C08K3/00-13/08, C08L1/00-101/14, B60C1/00-19/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2010-241983 A (Bridgestone Corp.), 28 October 2010 (28.10.2010), claims; paragraphs [0013] to [0016], [0053] to [0087]; tables 1 to 2 (Family: none) | 1-11 |
| X | JP 2009-263538 A (Bridgestone Corp.), 12 November 2009 (12.11.2009), claims; paragraphs [0013] to [0024], [0047] to [0069]; tables 1 to 5 (Family: none) | 1-11 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 June 2017 (08.06.17) | 20 June 2017 (20.06.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No. PCT/JP2017/019082

C (Continuation). DOCUMENTS CONSIDERED TO BE RELEVANT

| Category* | Citation of document, with indication, where appropriate, of the relevant passages | Relevant to claim No. |
|---|---|---|
| X | JP 2015-086316 A (Sumitomo Rubber Industries, Ltd.), 07 May 2015 (07.05.2015), claims; paragraphs [0020] to [0036], [0038] to [0051]; tables 1 to 2 (Family: none) | 1-11 |
| X | JP 2011-052103 A (Bridgestone Corp.), 17 March 2011 (17.03.2011), claims; paragraphs [0012] to [0013], [0054] to [0059], [0065] to [0077], [0083] to [0113]; tables 1 to 2 (Family: none) | 1-11 |
| X | WO 2012/108488 A1 (JSR Corp.), 16 August 2012 (16.08.2012), claims; paragraphs [0017] to [0019], [0035] to [0076]; tables 1 to 2 & US 2013/0345335 A1 claims; paragraphs [0029] to [0033], [0051] to [0118]; tables 1 to 2 & EP 2674456 A1 | 1-11 |
| A | WO 2010/061802 A1 (JSR Corp.), 03 June 2010 (03.06.2010), entire text (Family: none) | 1-11 |
| A | JP 64-022940 A (Japan Synthetic Rubber Co., Ltd., Bridgestone Corp.), 25 January 1989 (25.01.1989), entire text & US 4894409 A1 entire text | 1-11 |
| A | JP 04-370125 A (Kansai Research Institute, Inc.), 22 December 1992 (22.12.1992), entire text (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002338750 A